(19) Europäisches Patentamt
European Patent Office
Office européen des brevets

(11) Publication number: 0 173 246 B1

# (12) EUROPEAN PATENT SPECIFICATION

(45) Date of publication of patent specification: 08.08.90

(51) Int. Cl.$^5$: G 09 G 3/18, G 02 F 1/137

(21) Application number: 85110523.9

(22) Date of filing: 21.08.85

## (54) Method of driving liquid crystal element.

(30) Priority: 22.08.84 JP 173287/84

(43) Date of publication of application:
05.03.86 Bulletin 86/10

(45) Publication of the grant of the patent:
08.08.90 Bulletin 90/32

(84) Designated Contracting States:
CH DE FR GB IT LI NL SE

(56) References cited:
EP-A-0 092 181
DE-A-2 406 093
DE-A-3 235 143
DE-A-3 414 704
DE-B-1 764 966
DE-B-2 138 946
DE-B-2 347 093
DE-B-2 400 910
DE-B-2 449 543
US-A-3 936 815
US-A-4 040 721
US-A-4 062 626
US-A-4 290 686
US-A-4 367 924

IEEE TRANSACTIONS ON ELECTRON DEVICES, Vol. ED-24, No. 6, June 1977 "Multiplexing Techniques for Liquid-Crystal Displays", Pages 694-697

(73) Proprietor: HITACHI, LTD.
6, Kanda Surugadai 4-chome
Chiyoda-ku, Tokyo 100 (JP)

(72) Inventor: Kondo, Katsumi
19-3-401, Ishinazakacho-1-chome
Hitachi-shi (JP)
Inventor: Nagae, Yoshiharu
21-3, Kanesawacho-5-chome
Hitachi-shi (JP)

(74) Representative: Patentanwälte Beetz sen. - Beetz jun. Timpe - Siegfried - Schmitt-Fumian
Steinsdorfstrasse 10
D-8000 München 22 (DE)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

This invention relates to a driving method for a ferroelectric liquid crystal element which exhibits an electro-optical memory function, as defined in the preamble of claim 1.

Ferroelectric liquid crystals are a series of compounds typified by (S)2-methylbutyl-p-[(p-decycloxy-benzylidene-amino] cinnamate (which is generally referred to as "DOBAMBC") whose molecular design and synthesis were made by Meyer et al. in 1975 (Meyer et al., "J. derPhys.", *36* (1975) L-69). They exhibit ferroelectric properties in a smectic C* phase, for example. As shown in Fig. 1 the ferroelectric liquid crystal molecules 1 form a layer structure and a helical structure in the smectic C phase. Incidentally, reference numberal 2 indicates spontaneous polarization. It will now be assumed that the vector parallel to the long molecular axis is $\vec{n}$, the permanent dipole moment perpendicular to the former is $\vec{P}s$, the angle between a layer normal and n is θ, and a coordinate system is taken so that the layer normal and the Z axis become parallel. Then, $\vec{n}$ and $\vec{P}s$ can be expressed as follows:

$$\vec{n} = (\sin\theta\cdot\sin(2\pi Z/Lo), \sin\theta\cdot\cos(2\pi Z/Lo), \cos\theta)$$

$$\vec{P}s/\,|\,\vec{P}s\,| = (\cos(2\pi Z/Lo), \sin(2\pi Z/Lo), O).$$

Although ferroelectricity has been confirmed for some of the smectic phases other than the C* phase, the following description will be based on the C* phase by way of example.

When an electric field higher than a threshold voltage Ec is applied perpendicularly to the helical axis, the molecules move, and the helical structure becomes unwound while keeping the layer structure, and the permanent dipole moment perpendicular to the long axis of each molecule becomes parallel to the electric field. As the same time, not only the liquid crystal molecules in one layer but also those in all other layers arranged in parallel to one another. Two kinds of states where the molecules are inclined at angles ±θ can be attained, as shown in Fig. 2(c) by selecting the direction of the field E, and thus, display elements or optical shutter elements can be made therefrom by either utilizing birefringence or adding a dichroic dye to the liquid crystal.

When the electric field is removed (E=O), the ferroelectric liquid crystal molecules generally return to the orginal helical structure as shown in Fig. 2(b) due to their elastic righting moment of orientation, but a bistable state in which the helix is kept unwound can be accomplished such as shown in Figs. 2(a) and 2(c) even with zero field by, for example, positively utilizing the interface effect between glass and the liquid crystal by, for example, sealing the liquid crystal in an extremely thin cell which is about 1 μm thick, as proposed by Clark and Lagerwall (N. A. Clark and S. T. Lagerwall, "Appl. Phys. Lett.", *36* (1980), 899; JP—A—56—107216), or in a certain kind of smectic phase other than the smectic C phase.

As described above, the ferroelectric liquid crystals can be made bistable so that an electro-optical memory function can be accomplished. Therefore, further applications of those liquid crystals include large-scale displays having a large number of picture elements, high precision displays, optical shutters, polarizers, and so forth. Although the possible application of ferroelectric liquid crystals to high information capacity displays and the like has been discussed in the past, it has not been clarified in practice how to drive the liquid crystal by applying what voltage.

EP—A2—92182 discloses a method for driving liquid crystal elements comprising a ferroelectric liquid crystal sandwiched between a pair of substrates provided with electrodes. For defining the light transmission state of the liquid crystal element, a pulse voltage is applied to the ferroelectric liquid crystal. Before and/or after the application of the pulse voltage, a voltage signal is applied to the ferroelectric liquid crystal which renders the average value of voltages applied to the ferroelectric liquid crystal equal to zero. The liquid crystal elements described in this document are characterized by one single curve of the brighteness-voltage characteristic; accordingly, one voltage level corresponds to one particular light transmission state of the liquid crystal element, which has no memory characteristic.

It is the object of the present invention to provide a practical driving method for ferroelectric liquid crystal elements having a memory function on the basis of the relation between the waveform of an applied voltage and the light transmission factor of the ferroelectric liquid crystal that has been found out experimentally.

The above object is achieved according to claim 1. The dependent claims relate to preferred embodiments.

According to the present invention, the method of driving liquid crystal elements having a bistable ferroelectric liquid crystal sandwiched between electrodes and having a characteristic whereby the liquid crystal is capable of taking at least two light transmission states, by applying voltage pulses to the electrodes is characterized in that a liquid crystal element having a memory function is used, and

(A) for defining the initial light transmission state of the liquid crystal element a first voltage pulse is applied the absolute peak value of which is higher than a predetermined threshold voltage, and

(B) in order to maintain the light transmission state of the liquid crystal element, no further voltage pulses are applied, or further voltage pulses are applied the absolute peak value of which is less than the respective threshold voltage, or further voltage pulses of the same polarity are applied the peak value of which is higher than the respective saturation voltage at which there is substantially no voltage

dependence of the light transmission state of the liquid crystal element, and

(C) in order to change the light transmission state of the liquid crystal element, further voltage pulses are applied the absolute peak value of which is higher than the respective threshold voltage.

In accordance with a preferred embodiment, a ferroelectric liquid crystal is used having a sigmoid, hysteresis-like characteristic centered at a driving voltage of about zero.

Further, it is preferred to invert in case C high and low transmission states by applying voltage pulses whose polarity is opposite to that of the antecendent voltage pulses.

According to another embodiment, voltage pulses the peak value of which is higher than the respective saturation voltage, and whose polarity is opposite to that of the antecedent voltage pulse are applied in case C.

The voltage pulses are preferably applied such that the mean value of the volage applied to the ferroelectric liquid crystal is substantially equal to zero.

The period of time during which the voltage pulses ($V_2$) are applied is longer preferably in case B than in case C.

Another preferred embodiment is characterized in that the threshold voltages and the saturation voltages are adjusted by means of the pulse width of the voltage pulses.

It is further preferred to use a ferroelectric liquid crystal on the basis of (S)2-methylbutyl-p-(p-decycloxybenzylidene-amino)-cinnamate (DOBAMBC).

In accordance therewith, the memory properties of ferroelectric liquid crystal elements are utilized positively in the present invention, which is described in the following with reference to Figs. 3 to 30:

Fig. 3 is a cross section showing the structure of a liquid crystal element;

Figs. 4a to 4c are diagrams showing the characteristics of a ferroelectric liquid crystal;

Figs. 5 and 6 show diagrams useful for explaining the characteristics of a liquid crystal element;

Figs. 7 to 29 show waveforms and circuit diagrams useful for explaining embodiments of the present invention; and

Fig. 30 is a circuit diagram useful for explaining an example of a display device in which the driving method according to the present invention is used.

The present invention is based upon several experimental facts.

First of all, the structure of an experimental liquid crystal element will be explained with reference to Fig. 3.

The liquid crystal element consists of two transparent substrates 1, each having a transparent electrode 2 and consisting of glass, plastics, or the like, a PET (polyethylene terephthalate) film spacer 3 and a ferroelectric liquid crystal 4. One of the transparent substrates 1 is etched by use of a photoresist and hydrofluoric acid solution to form a step such as shown in Fig. 3. If such a step is used, liquid crystal elements having a gap of below 2 µm can be produced stably irrespective of the fact that films which are below 2 µm thick are difficult to obtain. A four-component mixed material shown in Table 1 is used as the ferroelectric liquid crystal. The gap is 1.6 µm, and no surface treatment such as coating of an orientation film, rubbing, or the like is applied to the transparent electrodes.

TABLE 1

| | |
|---|---|
| 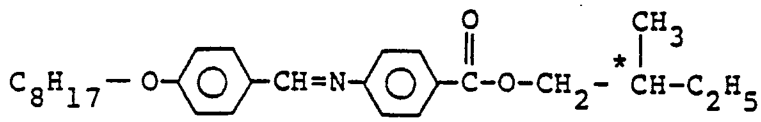 | 21 mole-% |
| 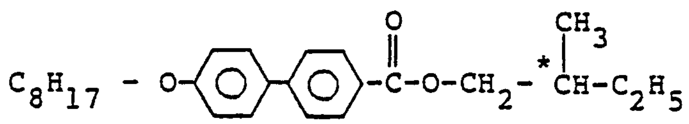 | 21 mole-% |
| 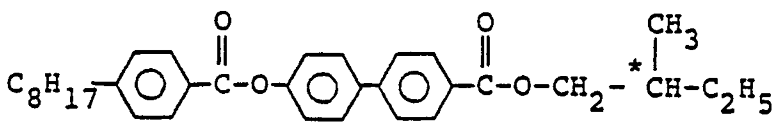 | 29 mole-% |
| 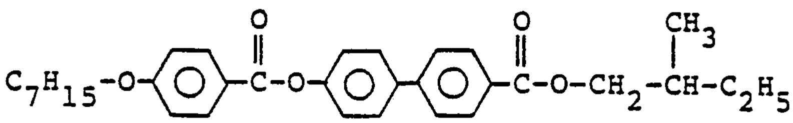 | 29 mole-% |

| | < 0°C | | 52°C | | 118°C | |
|---|---|---|---|---|---|---|
| Crystal phase | ⇄ | smectic $C^*$ phase | ⟷ | smectic A phase | ⟷ | isotropic phase |

Next, the orientation method of the liquid crystal molecules will be described.

First of all, the liquid crystal is heated to a temperature which is a little higher than the liquid crystal phase isotropic phase transition point (about 120°C in this case) to turn once the liquid crystal into the isotropic phase, and is then cooled gradually at a rate of about 0.1°C/min in order to turn the liquid crystal into the smectic A phase (in which the long axis of the molecules is perpendicular to the layer surface). In this example, the liquid crystal gradually grows with the long axis of molecules being parallel to the liquid crystal-spacer film interface and with the layers being aligned perpendicularly due to the interface effect on the cell side surfaces (liquid crystal-spacer film interface). Then, a good mono-domain is formed in a range which is sufficient for measurement. In the mono-domain growing process, the smectic A phase is formed in which the long axis of molecules and the layer normal are perpendicular to one another. When the liquid crystal is further cooled gradually down to below 54°C, the smectic C phase is attained in which the long axis of molecules is inclined from the layer normal while keeping the flatness of the layers. It has been confirmed from the following observation that the spiral disappears, and bistability is attained in this liquid crystal element.

The result of the measurement of the relation between the waveform of a voltage applied to the element and the light transmittance of the element (hereinafter referred to as "brightness") will be described. The electro-optical characteristics were measured under a crossed nicol of a polarizing miroscope to which a light intensity sensor was fitted, using a monochromatic light source. The sample was controlled at a room temperature of 23°C. The liquid crytal exhibited electro-optical memory properties it was confirmed that even after the field was removed, the memory lasted for several months) due to the bistability of the molecular orientation. The dark and bright light transmission states could be inverted when a pulse whose polarity was opposite to that of the previously applied pulse was applied. The brightness remained when the polarity of the pulse of the applied voltage to the liquid crystal was the same as that of the last pulse of those applied previously.

When a voltage pulse (having a peak value $V_{LC}$) having the same width (time width) but an opposite polarity was applied after application of a voltage pulse having a sufficient width (time width) and a sufficient peak value to completely invert the dark and bright light transmission states, optical response did not occur if the absolute value of $V_{LC}$ was below a certain value (inclusive of zero) (cf. Figs. 4a to 4c). The absolute value of the threshold voltage, at which optical response starts occurring, is defined as $Vth^{(+)}$ when $V_{LC} > 0$, and as $Vth^{(-)}$ when $V_{LC} < 0$. Furthermore, the present invention defines a voltage zone in which $-Vth^{(-)} < V_{LC} < Vth^{(+)}$ as an "insensitive zone". If the absolute value $|V_{LC}|$ of the voltage applied to the liquid crystal is greater than $Vth^{(+)}$ or $Vth^{(-)}$, the greater the voltage value, the greater becomes the change quantity of the brightness B. However, the brightness B has saturation values $Vsat^{(+)}$ and $Vsat^{(-)}$, and does not depend any more upon the voltage beyond a certain voltage value.

Fig. 4c shows the result of measurement of the brightness (Fig. 4b) when the two voltage pulses shown in Fig. 4a are applied. That is, the initial value Bo of the brightness is determined by the previous voltage pulse (peak value $V_1$) among the applied signals. If $V_1$ is positive and sufficiently high, the initial value Bo of the brightness is the maximum $B_{max}$, the exhibits the characteristic represented by the solid line *c* in Fig. 4c in which the abscissa represents the second pulse voltage (peak value) $V_2$. If $V_1$ is negative and sufficiently great, on the other hand, the initial value Bo of the brightness is the minimum $B_{min}$, and the characteristic with respect to $V_2$ becomes as represented by the dashed line *a* in Fig. 4c. If $V_1$ has an arbitrary predetermined value, and the intial value Bo of the brightness at this time is $B_b$, the characteristic with respect to $V_2$ becomes as represented by the dash-dotted line *b* in Fig. 4c.

The threshold voltage $Vth^{(+)}$, $Vth^{(-)}$ and the saturation voltages $Vsat^{(+)}$, $Vsat^{(-)}$ described above are also shown in Fig. 4c.

In Fig. 4c, the pulse width is constant at 1 ms.

It was confirmed from the embodiments that both the threshold voltages $Vth^{(+)}$ and $Vth^{(-)}$ were about 4 V, and the saturation voltages $Vsat^{(+)}$ and $Vsat^{(-)}$ were about 11 V, irrespective of the initial state. Incidentally, the observation was made within a range of about 0.25 $mm^2$, and the intermediate state of the brightness was attained as a large number of domains of the bright and dark two kinds of states ranging from several to some dozens of micrometers coexisted. From the experiment described above, the electro-optical hysteresis-like memory property, and the existence of the insensitive zone, that is, the sharp threshold value characteristics between $V_{LC}$ and B, were confirmed. The present invention positively utilizes these memory properties and the existance of the insensitive zone, and display elements, optical shutter elements, polarization elements, and so forth, can be made on that basis.

Furthermore, the following two experiments were carried out while assuming the case of matrix driving. First, optical response was measured by repeatedly applying a voltage $V_{LC}$ a little out of the insensitive zone ($V_{LC} \gtrsim Vth(+) \approx Vth(-)$; 5 V in in this case). The result is shown in Fig. 5. The indicated brightness values are normalized by its maximum value $B_{max}$. As can be seen from the results of these experiments, the change of brightness was gradually built up as the pulses of the same polarity were repeatedly applied as shown in Fig. 5a, whereas the brightness build-up did not occur when the polarities were sequentially inverted as shown in Fig. 5b. This means that when a voltage is applied to a picture element whose brightness is not desired to be changed, the voltage value must be kept within the insensitive zone, or, if it exceeds the insensitive zone, pulses having the same polarity should not be applied continuously.

In another experiment, the relation between the voltage and the brightness was measured in the same way as in Fig. 4 but by changing the pulse width $\tau$. An example is shown in Fig. 6. When the pulse width $\tau$ was increased, both of $Vth^{(-)}$ and $Vsat^{(-)}$ dropped. This result held true for the three characteristics in Fig. 4, and means that driving is possible even by the modulation of pulse width $\tau$.

Though the description that has been given so far deals with a liquid crystal element of the type in which the light passes through the element from its reverse, the same relations can be established in a so-called "reflection type element", too, in which a reflector is disposed on the reverse of the element.

The relations also hold true for so-called "guest-host type" elements in which a dychroic dye is mixed into the liquid crystal. In this case, the substrate on the reverse side need not be transparent.

Next, some definite driving waveforms and driving circuits suitable for practicing the present invention will be described with display elements by way of example. Generally, peculiar driving waveforms are employed to drive the liquid crystal elements in accordance with their types, such as ON-OFF binary display, a display in which gray-scale must be displayed, and so forth.

In order to describe the driving method for liquid crystal elements according to the present invention, the driving systems are classified as tabulated in Table 2, and the definite driving waveforms and driving circuits will be described for the respective systems.

Table 2

| Embodiment | Gray-scale | Display system | mean value of applied voltage |
|---|---|---|---|
| 1 | nil (binary display) | static | $\neq 0$ |
| 2 | | | $= 0$ |
| 3 | | matrix | $\neq 0$ |
| 4 | | | $= 0$ |
| 5 | yes | static | $\neq 0$ |
| 6 | | | $= 0$ |
| 7 | | matrix | $\neq 0$ |
| 8 | | | $= 0$ |

The classification shown in Table 2 is made in the following way. The first classification is made in accordance with the binary display and the gray-scale display. The second is made in accordance with static driving and matrix driving, and the third is made whether the mean value of the voltage waveforms applied to the liquid crystal is zero or not. In this manner, in toto eight kinds of driving methods can be classified. Hereinafter, embodiments of the present invention will be described in detail for the respective classifications.

Embodiment 1

Embodiment 1 corresponds to the class of binary display, static driving, and the mean value of the impressed voltage to the liquid crystal being not zero.

In this embodiment, the driving method is the simplest, and the display state (the bright or dark state) is determined by applying a voltage pulse to the liquid crystal the absolute peak value thereof exceeding the insenstive zone. The relation between the impressed voltage and the brightness of the liquid crystal element is shown in Fig. 7. When a voltage pulse in a positive direction as a first signal is applied, the brightness increases, and the bright state is kept due to the memory property of the ferroelectric liquid crystal. This state continues until another signal, that is, a negative voltage pulse, is applied, and the bright state changes to the dark state when this voltage pulse is applied. This state is also kept due to the memory property. Here, the peak values $V_{on}$ and $V_{off}$ applied to the liquid crystal according to Fig. 7 should satisfy the relation $V_{on} > Vth^+$ and $V_{off} < Vth^-$.

Preferably the relation $V_{on} \geqq Vsat^+$ and $V_{off} \leqq Vsat^-$ is established.

A driving circuit and the electrode arrangement of the liquid crystal element for applying these voltage pulses are shown in Fig. 8.

In the case of static driving, a group of segment electrodes 97 are disposed in such a manner as to face a common electrode 96 of the liquid crystal element 95, the liquid crystal being sandwiched between both electrodes. Each segment elecrode 97 is equipped with one driving circuit 91—94. A display signal $S_1$—$S_4$ for determining the display state of each segment electrode, a clock signal C, d.c. voltages $V_{on}$ and $V_{off}$ corresponding to the driving waveforms, and ground potential GND are applied to the input terminal of each driving circuit.

The driving circuit 91—94 is shown in detail in Fig. 9. The circuit shown in the drawing constitutes as a

whole a switch controlled by the display signal S and the clock signal C, and has the function of selecting and producing one of the input voltages $V_{on}$, GND and $V_{off}$ having the three levels.

In the drawing, the circuits 101, 102 and 103 represent analog switches which consist of MOS transistors, for example, and which are referred to as "transfer gates", respectively.

Fig. 10 shows the time sequence representing the operation of this circuit. Here, the display signal S selects the bright stage at the time of the logic zero "0" and the dark state at the time of "1". When $+V_1$ volt and $-V_1$ volt are applied as $V_{on}$ and $V_{off}$, respectively, the output $V_{out}$ of the driving circuit produces the positive and negative voltage pluses in response to the display signal S as shown in Fig. 10, so that the brightness B of the liquid crystal element changes in accordance with the display signal S, thereby accomplishing the predetermined display.

Incidentally, when the display state does not change, the third pulse $P_3$ and the fifth pulse $P_5$ in Fig. 10 may be omitted.

In each of the embodiments of the invention, the description will be made while the reference level of the signal applied to the electrode is set to the ground level 0, however, the reference level of the signals applied to the electrodes may naturally be arbitrary.

Embodiment 2

This embodiment is different from Embodiment 1 only in that the mean value of the impressed voltages applied to the liquid crystal is made zero. This embodiment provides the effect of preventing the electrochemical degradation of the liquid crystal.

The driving circuit and the electrode configuration of this embodiment are exactly the same as those of Fig. 8. However, among the inputs of the driving circuits 91—94, $V_{on}$ and $V_{off}$ are different.

Fig. 11 shows the input signal and output of each driving circuit 91—94 and the brightness B of the liquid crystal element. Among them, the display signal S and the clock signal C are exactly the same as those in Fig. 10, but $V_{on}$ and $V_{off}$ are a.c. square waves having an amplitude of V volt and are applied having their phases inverted with one another. Incidentally, $V_o$ has a phase such that it is $-V$ in the former half period of the clock signal "0" and $+V$ in the latter half.

When the display signal S such as shown in Fig. 11 is applied to the inputs $V_{on}$ and $V_{off}$, the output $V_{out}$ becomes such as shown in Fig. 11. In other words, when the display signal S is "0", the a.c. square waves are produced in the sequence of $-V$ and $+V$ in synchronism with the clock signal, and when the display signal is "1", the a.c. square waves are produced in the sequences of $+V$ and $-V$. In this case, the brightness of the liquid crystal element is determined by the latter polarity of each a.c. square wave. That is, when the a.c. square wave in the sequence of $-V$ and $+V$ is applied, the display state is dark while $-V$ is applied, but since $+V$ is applied next, it changes to the bright state. This bright state is held for the period until the next pulse is applied, so that the liquid crystal to which the pulses in the sequence $-V$ and $+V$ are applied is in the bright state. Similarly, the liquid crystal to which the a.c. square waves in the sequence of $+V$ and $-V$ are applied is in the dark state.

In this case, too, it is not necessary to apply the driving signal when the same display state continues, so that the driving signal may be applied only when the display state is to be changed.

Embodiment 3

This embodiment corresponds to the class of binary display, matrix driving, and the mean value of the voltage applied to the liquid crystal not being zero.

First of all, matrix driving will be described with reference to Fig. 12. In matrix driving, a plurality of X—Y electrodes such as $X_1$, $X_2$, $Y_1$, $Y_2$ are provided, and the points of intersection constitute picture elements. Driving circuits $SX_1$, $SX_2$, $SY_1$, $SY_2$ are connected to these electrodes, respectively.

It will now be assumed that each driving circuit is an analog switch which can select one output from two inputs. It will also be assumed that the respective inputs are a selection waveform XS for driving the X electrode, a non-selection waveform XNS, YS for driving the Y electrode and a non-selection waveform YNS. The signals for producing either one of each input pair will be assumed to be $X_1$, $X_2$, $Y_1$, $Y_2$.

It is preferred to use a transfer gate shown in Fig. 13 as an example of each X, Y electrode driving circuit.

Next, the waveforms XS, XNS, YS, YNS are shown in Fig. 14. These waveforms consist of pulse voltage waveforms having a suitable period, and XS uses a pair of positive and negative pulses having a unit amplitude $V_o$. XNS is the ground level 0 as reference level K.

The waveforms YS and YNS are pulses of opposite polarities, respectively, and their pulse widths are twice the pulse width of the waveform XS.

Fig. 15 shows the signal waveforms for the bright state and the dark state of the picture elements marked by ◯ and respectively, in Fig. 12. In Fig. 15, $X_1$ and $X_2$ indicate that the signal "0" is selected, and $Y_1$ and $Y_2$ also represent that the signal "0" is selected. In this way, the voltages $V_{X1}$, $V_{X2}$, $V_{Y1}$, and $V_{Y2}$ which are applied to the respective electrodes are determined.

Due to this, the voltage which is applied to each pixel is such that, for the pixel 11, $V_{11} = V_{X1} - V_{Y1}$, $V_{12} = V_{X1} - V_{Y2}$, $V_{21} = V_{X2} - V_{Y1}$, and $V_{22} = V_{X2} - V_{Y2}$. These voltages are shown in Fig. 16. In Fig. 16, it is the pulse having the peak values of $\pm V_1$ that substantially changes the display state. The other pulses of the peak value $\pm V_2$ are the voltages in the insensitive zone are previously defined, in which $|V_2| < |V_{th}|$. Therefore,

the bright or dark state is decided in dependence on the positive or negative sign of the pulse of the peak value $\pm V_1$. On one hand, the absolute value $|V_1|$ of the peak value may be preferably set such that $|V_1| \geqq |V_{th}$ or $V_1| \geqq |V_{sat}|$. Although Fig. 16 shows waveforms where $V_s = \frac{1}{2}V_0$, it is sufficient that the value of $V_0 - V_s$ is smaller than $V_{th}$.

Embodiment 4

This embodiment is constituted such that the mean value of the voltage which is applied to the liquid crystal becomes zero as compared with embodiment 3. For this purpose, the waveforms XS, XNS, YS, and YNS in embodiment 3 may be changed as shown in Fig. 17.

In this case, the voltages which are applied to the liquid crystal become as shown in Figs. 18a and 18b depending upon the display state (the display state of Fig. 12 is shown as an example). As will be understood from these diagrams, only the voltage pulse of the amplitude $V_1$ is correlated with the change of the display state. However, as a pulse which is applied to the picture element of the bright display, the pulse having the amplitude of $V_1$ is applied in accordance with the sequence of negative to positive, while the pulse is applied to th epicutre element of the dark display in accordance with the sequence of positive to negative. In this case, since the display state is determined by the latter pulse, a predetermined display can be accomplished.

Embodiment 5

This embodiment relates to a driving method in case of a static driving, and a gray-scale display, and where the mean value of the voltages applied to the liquid crystal is not zero. In this driving method, to obtain a predetermined brightness in gray-scale display, the display state before the pulse corresponding to the gray-scale is given has to be constant; therefore, the liquid crystal is set to the dark state for a predetermined time period before the pulse is applied. This may be set to the bright state.

This driving method is based on the experimental data of Fig. 19. Namely, good gray-scale display can be attained by applying the voltage corresponding to a predetermined brightness immediately after the voltage which is applied to the liquid crystal was temporarily set to $-V_0$. In this case, $|V_0|$, $|V_a|$, and $|V_b|$ are larger than $|V_{th}|$, and $|V_a|$ and $|V_b|$ are smaller than $|V_{sat}|$.

Fig. 20 shows a schematic diagram of a circuit which is used in this embodiment. A driving circuit 212 is connected to each segment electrode of a liquid crystal display element 211 for static driving. The driving circuits 212 receive the voltages $V_0$, $V_1$, $V_2$, and $V_3$ so that a gray-scale of four stages can be displayed, and it is assumed that one of them is outputted in response to a signal of $S_1$, $S_1'$, or the like.

Fig. 21 shows $V_0$ to $V_4$.

In Fig. 21, $-Va$ denotes the peak value of the pulse to determine a reference brightness; for instance, the relation $|-V_a| > |V_{sat}^{+}|$ may be preferably set. V11, V12, and V33 in the voltages V1 to V3 are peak values of the pulse to actually determine the gray-scale, and, in this example, $V_{11} < V_{22} < V_{33}$. At the voltage $V_0$, the peak wave of the pulse to determine the gray-scale is set to 0. It is obvious that the peak value of the pulse to determine the peak wave may be set to any value. In accordance therewith, gray-scale display can be accomplished. On the other hand, as shown in Fig. 22, there is also a method whereby a driving circuit is provided to apply the voltage $V_c$ to the common electrode side. Fig. 23 shows the waveform of $V_0$ to $V_4$ and $V_c$ in this case. Even by way of this method, a good gray-scale display can be attained. The foregoing method is characterized in that any of those waveforms is constituted by a voltage pulse of single polarity.

Embodiment 6

According to this embodiment, the mean value of the voltage applied to the liquid crystal is zero, as compared with embodiment 5. The waveforms $V_0$ to $V_3$ which are used in this embodiment are shown in Fig. 24.

It is now assumed that the peak value of the second pulse among three pulses is $-V_a$. $|V_a|$ may be set to be larger than $|V_{sat}|$. When the peak value of the third pulse is expressed by adding a dash (') as compared with the peak value of the first pulse, the peak value of the third pulse determines the intermediate tone. The first pulse serves to correct the mean value of the impressed voltage to 0 and, for example, the relation $|V_b + V_{b'}| = |-V_a|$ is established.

Namely, a set of pulse voltages consists of three pulses, and the last pulse thereof decides the gray-scale level, while the previous pulse (i.e., the second pulse among the three pulses) determines a constant display state (dark state in this case). The further previous pulse (i.e. the first pulse) decides that the mean value of the applied voltage is 0. The waveforms of the voltage $V_0$ to $V_3$ are applied to the driving circuit of Fig. 22. Due to this, the gray-scale display is attained, and also the DC component of the voltage, which is a factor of deterioration, can be removed.

Embodiment 7

This embodiment relates to a driving method in case of a gray-scale display and matrix driving, and where the mean value of the voltage applied to the liquid crystal is not zero.

Also in this embodiment, as shown in Fig. 25, the case where the liquid crystal display panel in which liquid crystal display elements are arranged like a matrix of 2 × 2 is driven will be explained as an example. Scanning driving circuits $SX_1$ and $SX_2$ are connected to the electrodes in the X direction and can apply driving voltages XS and XNS to the electrodes by scanning signals $X_1$ and $X_2$, respectively. The circuit shown in Fig. 13 may be used as practical example of the circuits $SX_1$ and $SX_2$.

On one hand, driving circuits $SY_1$ and $SY_2$ are connected to the electrodes in the Y direction and control the four driving voltages $V_0$ to $V_3$ by the input signals $Y_1$ and $Y_2$ and then apply the signals to the electrodes. These circuits are also constituted by a combination of transfer gates similar to the circuits $SX_1$ and $SX_2$.

Fig. 26 shows driving voltage waveforms XS, XNS, $V_0$, $V_1$, $V_2$, and $V_3$. Namely, the waveform XS consists of two pulses of the peak value $\pm V_a$. The waveform XNS is a pulse waveform of 0. Each of the voltages $V_0$ to $V_3$ is a pulse waveform such that the former half has the peak value Vb, and the latter half has the peak wave corresponding to the gray-scale.

Fig. 27 shows driving waveforms $V_{X1}$, $V_{X2}$, $V_{Y1}$, and $V_{Y2}$ to drive the respective electrodes when the brightness of four picture elements is as shown in Fig. 25. In this case, the voltages which are applied to the respective picture elements become as shown in Fig. 28 since they are equal to the differences among the voltages which are applied to both electrodes.

It is important here that $|V_b|$, $|V_c|$ and $|V_d|$, namely, all of the peak values of the XNS do not exceed the threshold $|V_{th}|$. In addition, it is desirable that $|-V_a - V_b|$ exceeds the saturation voltage $|V_{sat}|$. Due to this, when the pulse of the peak value $-V_a-V_b$ is applied, the display of the picture element is saturated into the dark state, and a constant gray-scale is displayed by the next pulse. On the other hand, since any of the pulses which are applied for the time period when the picture elements on other scanning electrodes are being selected is below $|V_{th}|$, that is, since the voltage is in the intensive zone, the display state does not change, and a predetermined display can be performed.

According to this embodiment, gray-scale matrix driving can be executed.

Embodiment 8

In this embodiment, the mean value of the voltage applied to the liquid crystal is set to 0 as compared with embodiment 7.

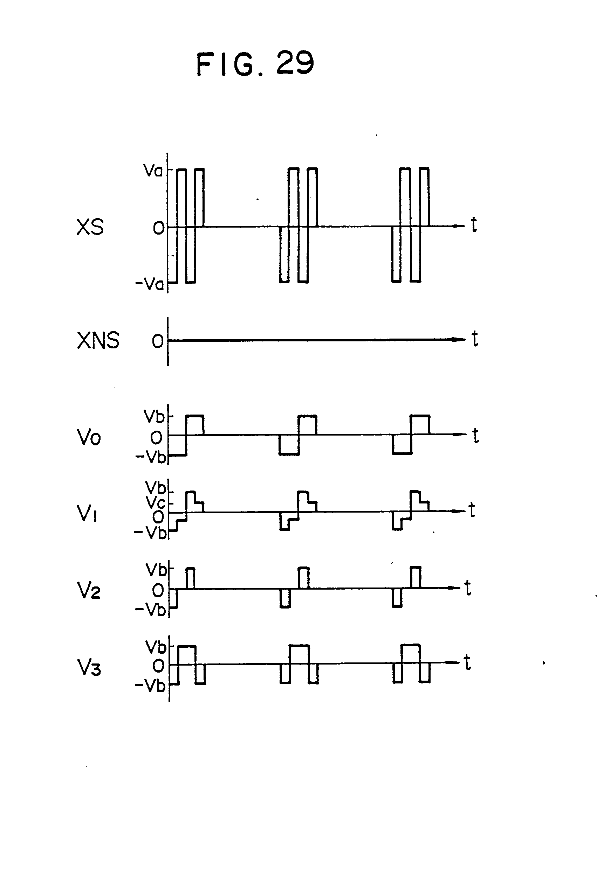

The driving voltage waveforms, XS, XNS, $V_0$, $V_1$, $V_2$, and $V_3$ in embodiment 7 may be set as shown in Fig. 29. In embodiment 8, it is important that the peak value of the waveform XNS does not exceed $|V_{th}|$.

Embodiment 9

This embodiment relates, as an example, to the arrangement of a display apparatus using a liquid crystal display panel which is driven by way of the foregoing various kinds of driving methods. Fig. 30 shows a matrix type liquid crystal display panel 300 using a highly dielectric liquid crystal, driving circuits 310 and 320 to drive the electrode groups in the X and Y directions, and their peripheral circuits, etc.

The driving circuit 310 is connected to the electrodes in the X direction of the liquid crystal display panel 300 and is line-sequentially scanned at a predetermined period by an output of a scanning signal circuit 311. The signal side driving circuit 320 which is connected to the electrodes in the Y direction receives a signal "0" or "1" corresponding to the display state (bright or dark state). These signals are given by a shift register 321 and a latch circuit 322. Characters, graphic patterns, and the like to be displayed are stored in a frame memory 330 and are outputted to the shift register 321 at a predetermined speed. After all signals corresponding to one scanning line were transferred to the shift register, the latch circuit 322 is made operative, so that the display data are stored therein and are also outputted to the driving circuit 320. It is apparent that these operations are performed in synchronisation with the circuits on the scanning side.

The display signal to be stored in the frame memory 330 may be a signal of an external apparatus, for instance, a keyboard or a computer, or television signals or the like. This display signal is stored in the frame memory while matching the timing by a timing control circuit 331. It is obvious that the timing control circuit controls the timing of all circuits.

**Claims**

1. A method of driving liquid crystal elements having a bistable ferroelectric liquid crystal (4) sandwiched between electrodes (2) and having a characteristic whereby the liquid crystal (4) is capable of taking at least two light transmission states, by applying voltage pulses to the electrode (2), characterised in that a liquid crystal element having a memory function is used, and

(A) for defining the initial light transmission state of the liquid crystal element a first voltage pulse is applied the absolute peak value ($V_1$) of which is higher than a predetermined threshold voltage ($V_{th}$), and

(B) in order to maintain the light transmission state of the liquid crystal element, no further voltage pulses are applied, or further voltage pulses are applied the absolute peak value ($V_2$) of which is less than the respective threshold voltage ($V_{th}$), or further voltage pulses of the same polarity are applied the absolute peak value ($V_2$) of which is higher than the respective saturation voltage ($V_{sat}$) at which there is substantially no voltage dependence of the light transmission state of the liquid crystal element, and

(C) in order to change the light transmission state of the liquid crystal element, further voltage pulses are applied the absolute peak value ($V_2$) of which is higher than the respective threshold voltage ($V_{th}$).

2. The method according to claim 1, characterized in that a ferroelectric liquid crystal (4) is used having a sigmoid, hysteresis-like characteristic centered at a driving voltage of about zero.

3. The method according to claim 1 or 2, characterized in that in case C high and low transmission states are inverted by applying voltage pulses ($V_2$) whoe polarity is opposite to that of the antecedent voltage pulses.

4. The method according to any one of claims 1 to 3, characterized in that in case C voltage pulses the peak value ($V_2$) of which is higher than the respective saturation voltage ($V_{sat}$), and whose polarity is opposite to that of the antecedent voltage pulse are applied.

5. The method according to one of claims 1 to 4, characterized in that the voltage pulses are applied such that the mean value of the voltage applied to the ferroelectric liquid crystal is substantially zero.

6. The method according to one of claims 1 to 5, characterized in that the period of time during which the voltage pulses ($V_2$) are applied is longer in case B than in case C.

7. The method according to one of claims 1 to 6, characterized in that the threshold voltages ($V_{th}$) and the saturation voltages ($V_{sat}$) are adjusted by means of the pulse width of the voltage pulses ($V_2$).

8. The method according to one of claims 1 to 7, characterized in that a ferroelectric liquid crystal on the basis of (S)2-methylbutyl-p-(p-decyloxybenzylideneamino)-cinnamate (DOBAMBC) is used.

**Patentansprüche**

1. Eine Methode zum Ansteuern von Flüssigkristallelementen, die ein bistabiles, ferro-elektrisches Flüssigkristall (4) haben, das zwischen Elektroden (2) eingebetet ist und das eine Kennlinie hat, längs derer das Flüssigkristall (4) in der Lage ist, zumindest zwei Lichtdurchlässigkeitszustände einzunehmen, in dem man Spannungsimpulse an die Elektroden (2) anlegt, dadurch gekennzeichnet, daß ein Flüssigkristallelement benützt wird, das eine Speicherfunktion aufweist und

(A) das zur Festlegung des anfänglichen Lichtdurchlässigkeitszuständs des Flüssigkristallelements ein erster Spannungsimpuls angelegt wird, dessen absoluter Spitzenwert ($V_1$) größer als ein vorbestimmter Schwellwert ($V_{th}$) ist, und

(B) daß zum Beibehalten des Lichtdurchlässigkeitszustandes des Flüssigkristallelements keine weiteren Spannungsimpulse angelegt werden oder daß weitere Spannungsimpulse angelegt werden, deren absoluter Spitzenwert ($V_2$) kleiner als der jeweilige Schwellwert ($V_{th}$) ist, oder daß weitere Spannungsimpulse derselben Polarität angelegt werden, deren Spitzenwert ($V_2$) höher als die jeweilige Sättigungsspannung ($V_{sat}$) ist, bei der annähernd keine Spannungsabhängigkeit des Lichtdurchlässigkeitszustandes des Flüssigkristalls besteht, und

(C) daß zum Ändern des Lichtdurchlässigkeitszustandes des Flüssigkristalls weitere Spannungsimpulse angelegt werden, deren absoluter Spitzenwert ($V_2$) höher als der jeweilige Schwellwert ($V_{th}$) ist.

2. Methode nach Anspruch 1, dadurch gekennzeichnet, daß ein ferroelektrisches Flüssigkristall (4) benutzt wird, das eine S-förmige hysterese-ähnlichie Kennlinie aufweist, die bezüglich einer Ansteuerspannung von etwa Null Volt zentriert ist.

3. Methode nach Anspruch 1 oder 2, dadurch gekennzeichnet, daß im Falle (C) hohe und niedrige Durchlässigkeitszustände ineinander übergeführt werden, indem Spannungsimpulse ($V_2$) angelegt werden, deren Polarität entgegengesetzt zu der des vorherigen Spannungsimpulses ist.

4. Methode nach einem der Ansprüche 1 bis 3, dadurch gekennzeichnet, daß im Falle (C) Spannungsimpulse angelegt werden, deren Spitzenwert ($V_2$) größer als die jeweilige Sättigungsspannung ($V_{sat}$) ist, und deren Polarität engegengesetzt zu der des vorhergehenden Spannungsimpulses ist.

5. Methode nach einem der Ansprüche 1 bis 4, dadurch gekennzeichnet, daß die Spannungsimpulse so angelegt werden, daß der Mittelwert der an das ferroelektrische Flüssigkristall angelegten Spannung in etwa Null ist.

6. Methode nach einem der Ansprüche 1 bis 5, dadurch gekennzeichnet, daß die Zeitdauer der angewendeten Spannungsimpulse ($V_2$) im Falle (B) länger ist als im Falle (C).

7. Methode nach einem der Ansprüche 1 bis 6, dadurch gekennzeichnet, daß die Schwellenspannungen ($V_{th}$) und die Sättigungsspannungen ($V_{sat}$) mit Hilfe der Impulslängen der Spannungsimpulse ($V_2$) eingestellt werden.

8. Methode nach einem der Ansprüche 1 bis 7, dadurch gekennzeichnet, daß ein ferroelektrische Flüssigkristall auf der Basis von (S)2-Methylbutyl-p-(p-decyloxybenzylidene-amino)cinnamate (DOBAMBC) bunützt wird.

**Revendications**

1. Procédé pour commander des éléments à cristal liquide comportant un cristal liquide ferroélectrique bistable (4) inséré entre des électrodes (2) et possédant une caractéristique, selon laquelle le cristal liquide (4) peut prendre au moins deux états de transmission de la lumière moyennant l'application d'impulsions de tension aux électrodes (2), caractérisé en ce que on utilise un élément à cristal liquide possédant une fonction de mémoire, et

(A) pour définir l'état initial de transmission de la lumière de l'élément à cristal liquide, on applique une première impulsion de tension, dont la valeur maximale absolue ($V_1$) est supérieure à une tension de seuil prédeterminée ($V_{th}$), et

(B) pour maintenir l'élément à cristal liquide dans l'état de transmission de la lumière, on n'applique aucune autre impulsion de tension ou on applique d'autres impulsions de tension, dont la valeur maximum absolue ($V_2$) est inférieure à la tension de seuil respective ($V_{th}$), ou on applique d'autres impulsions de

tension possédant la même polarité, dont la valeur maximum ($V_2$) est supérieure à la tension de saturation respective ($V_{sat}$), pour laquelle il n'existe sensiblement aucune dépendance de l'état de transmission de la lumière de l'élément à cristal liquide vis-à-vis de la tension, et

(C) pour modifier l'état de transmission de la lumière de l'élément à cristal liquide, on applique d'autres impulsions de tension, dont la valeur maximale absolue ($V_2$) est supérieure à la tension de seuil respective ($V_{th}$).

2. Procédé selon la revendication 1, caractérisé en ce qu'on utilisé un cristal liquide ferroélectrique (4) possédant une caractéristique sigmoïde, semblable à une hystérésis et centrée sur une tension de commande voisine de zéro.

3. Procédé selon l'une des revendication 1 où 2, caractérisé en ce que dans le cas C, on inverse des états de transmission à niveau élevé et à niveau bas au moyen de l'application d'impulsions de tension ($V_2$) dont la polarité est opposée à celle des impulsions de tension précédentes.

4. Procédé selon l'une des revendications 1 à 3, caractérisé en ce que dans le cas C, on applique des impulsions de tension, dont la valeur maximale ($V_2$) est supérieure à la tension de saturation respective ($V_{sat}$) et dont la polarité est opposée à celle de l'impulsion de tension précédente.

5. Procédé selon l'une des revendications 1 à 4, caractérisé en ce qu'on applique les impulsions de tension de telle sorte que la valeur moyenne de la tension appliquée au cristal liquide ferroélectrique est sensiblement nulle.

6. Procédé selon l'une des revendications 1 à 5, caractérisé en ce que l'intervalle de temps, pendant lequel les impulsions de tension ($V_2$) sont appliquées, est plus long dans le cas B que dans le cas C.

7. Procédé selon l'une des revendications 1 à 6, caractérisé en ce que les tensions de seuil ($V_{th}$) et les tensions de saturation ($V_{sat}$) sont réglées au moyen de la durée des impulsions de tension ($V_2$).

8. Procédé selon l'une des revendications 1 à 7, caractérisé en ce qu'on utilise un cristal liquid ferroélectrique formé à base de S(2)-méthylbutyl-p-(p-décyloxybenzylidène-amino)-cinnamate (DOBAMBC).

FIG. 1

PRIOR ART

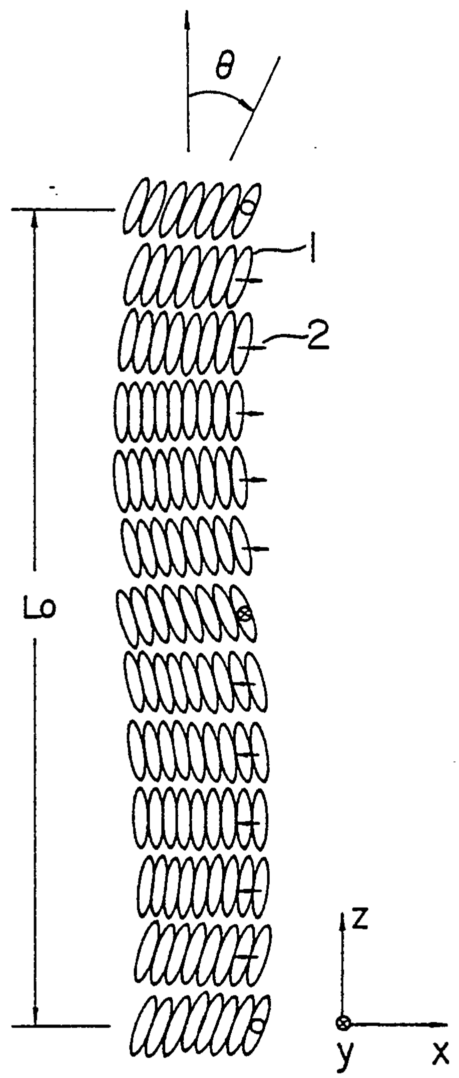

FIG. 2
PRIOR ART

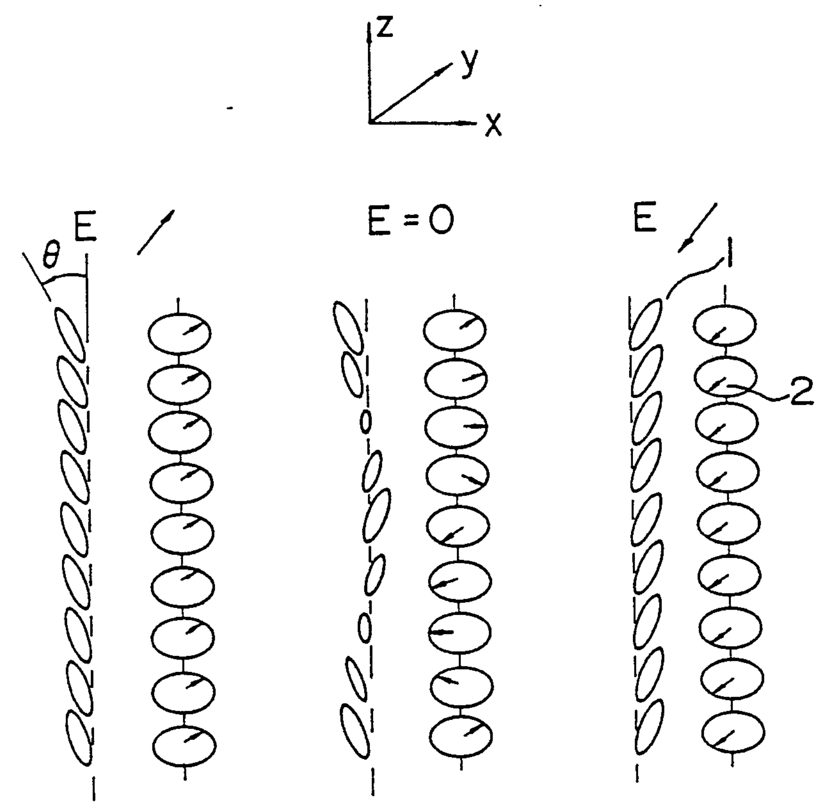


(a) (b) (c)

FIG. 3

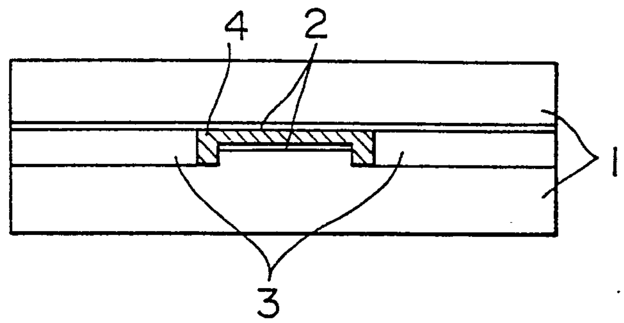

FIG.4a

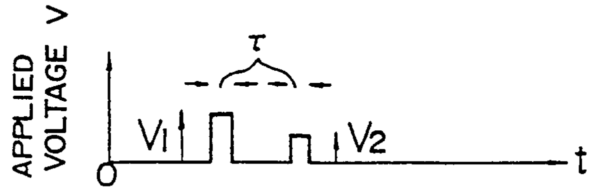


FIG.4b

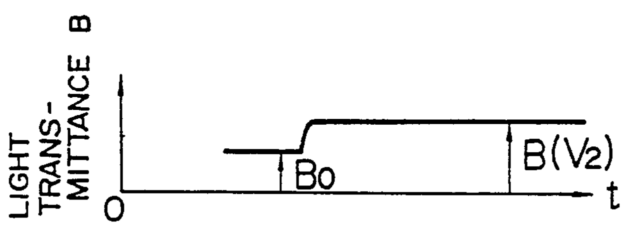


FIG.4c

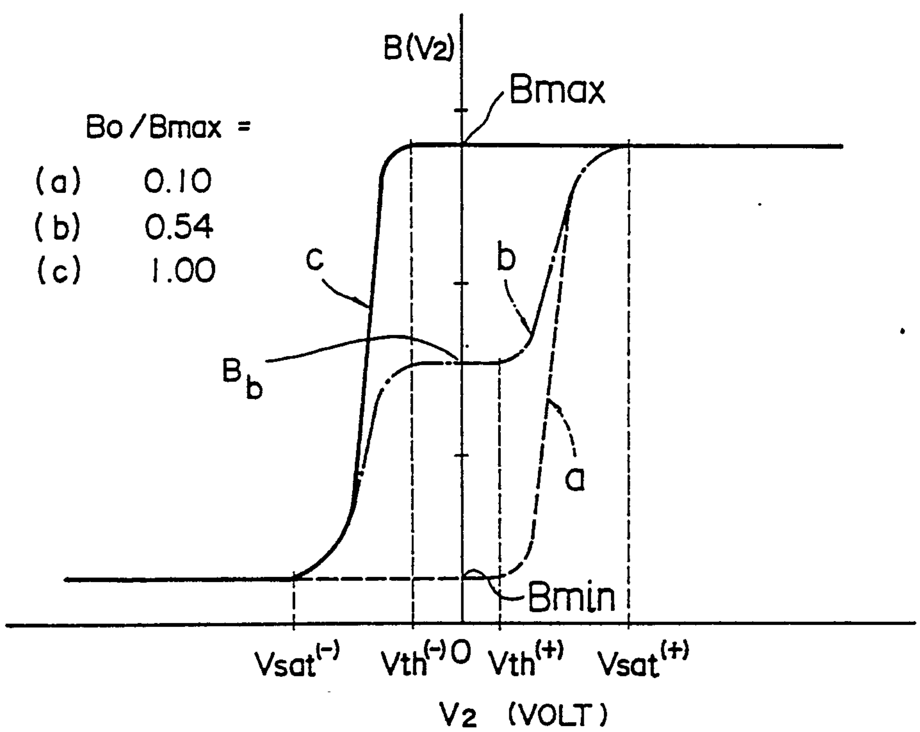

FIG. 5a

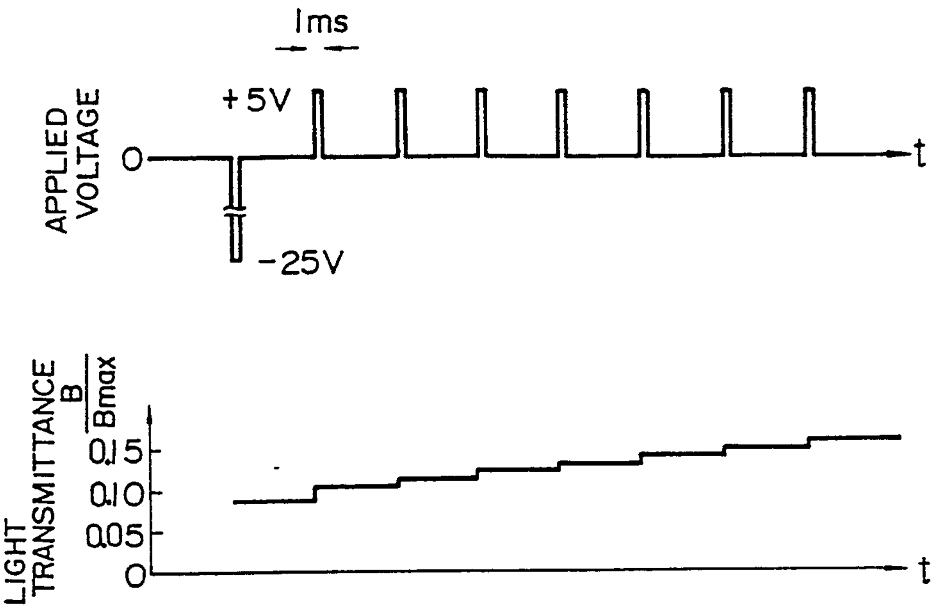
1ms
+5V
APPLIED VOLTAGE
0
t
-25V
LIGHT TRANSMITTANCE B/Bmax
0.15
0.10
0.05
0
t

FIG. 5b

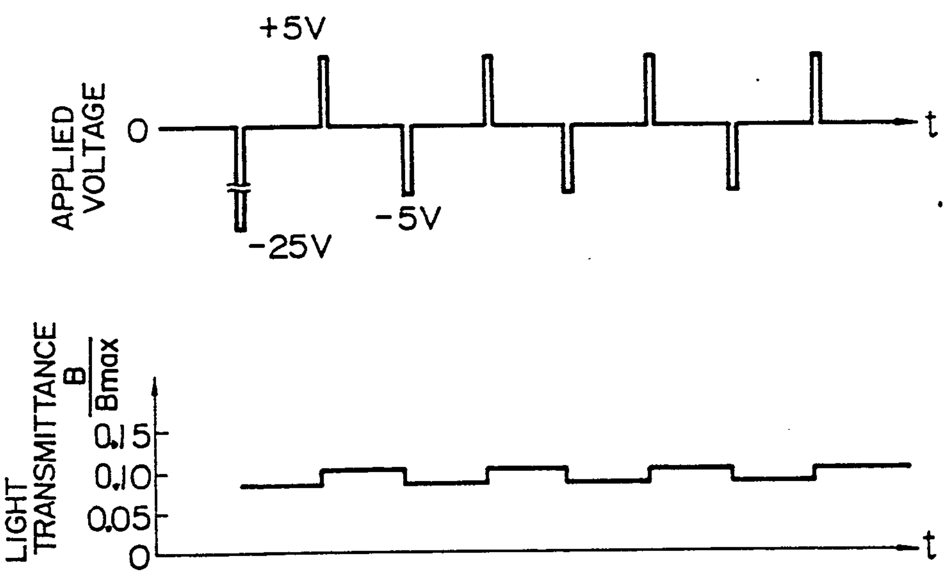
+5V
APPLIED VOLTAGE
0
t
-5V
-25V
LIGHT TRANSMITTANCE B/Bmax
0.15
0.10
0.05
0
t

FIG.6

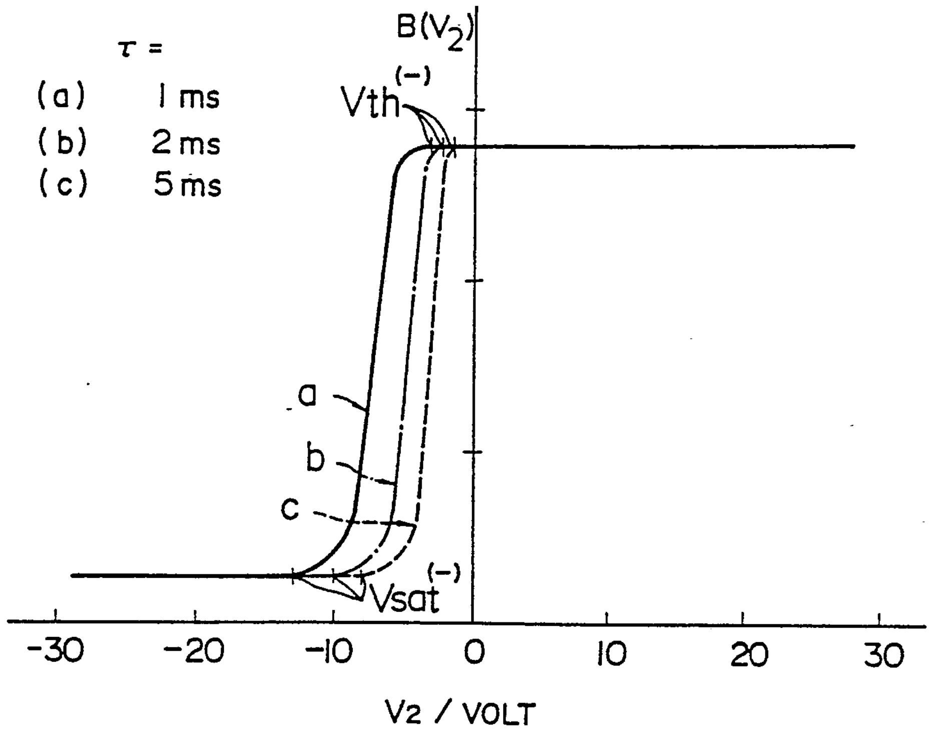
B(V2)
τ =
(a) 1 ms
(b) 2 ms
(c) 5 ms
Vth(−)
a
b
c
Vsat(−)
-30
-20
-10
0
10
20
30
V2 / VOLT

FIG.7

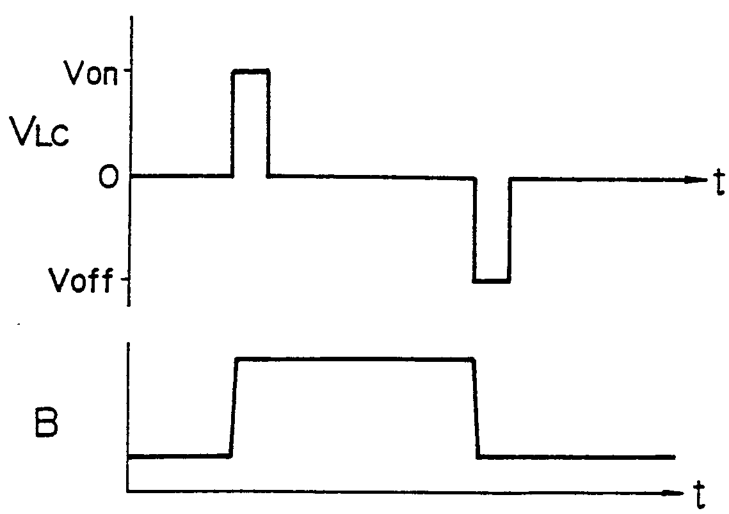
Von
VLC
0
Voff
t
B
t

FIG. 8

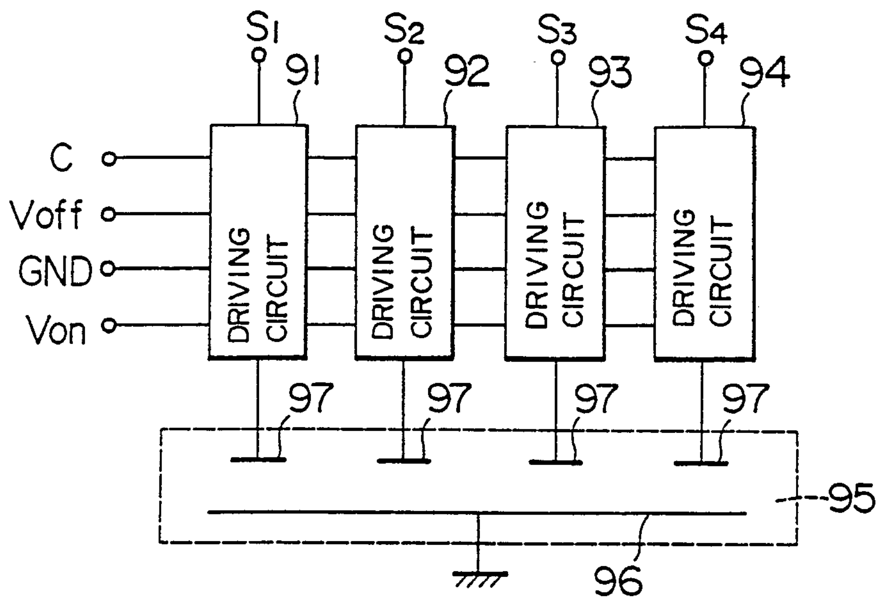
S1
S2
S3
S4
91
92
93
94
C
Voff
GND
Von
DRIVING CIRCUIT
DRIVING CIRCUIT
DRIVING CIRCUIT
DRIVING CIRCUIT
97
97
97
97
95
96

FIG. 9

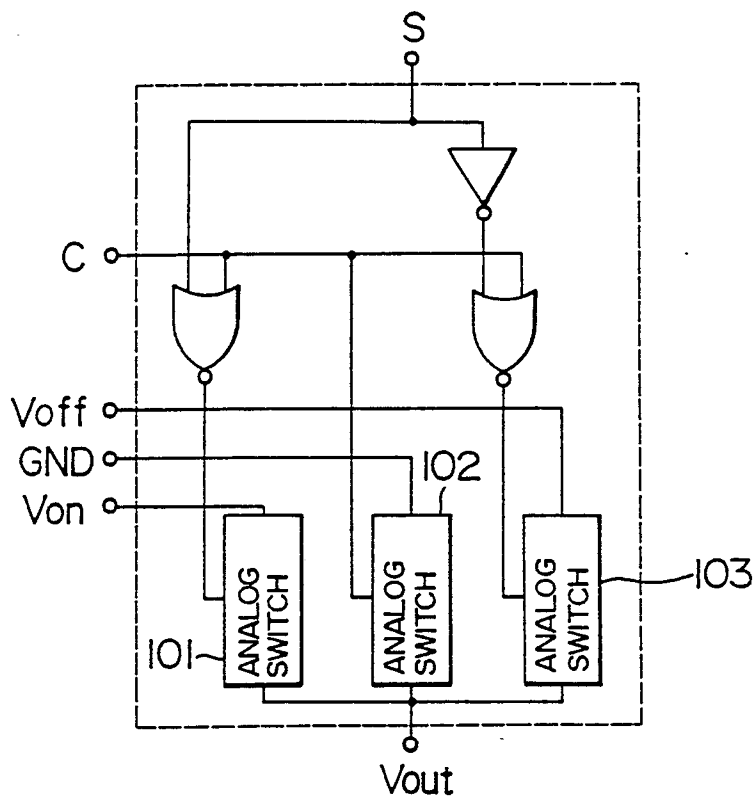
S
C
Voff
GND
Von
102
103
101
ANALOG SWITCH
ANALOG SWITCH
ANALOG SWITCH
Vout

FIG. 10

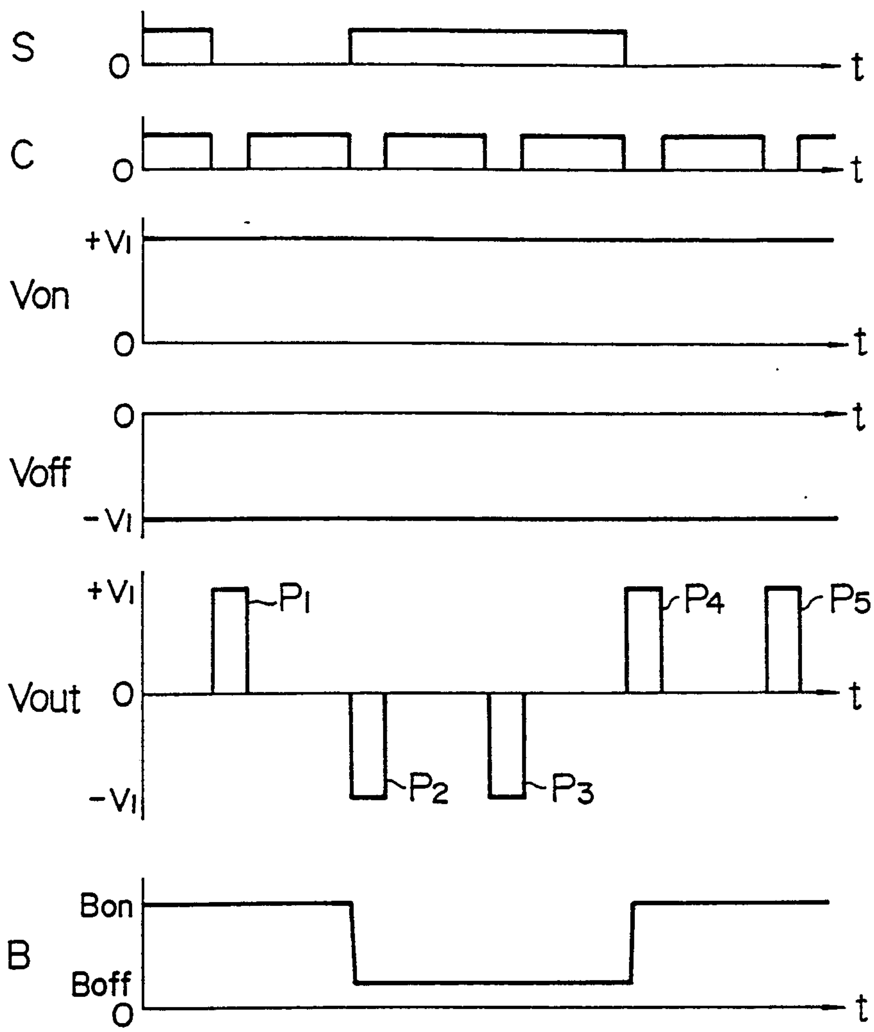
S
0
t
C
0
t
+V1
Von
0
t
0
t
Voff
-V1
+V1
P1
P4
P5
Vout
0
t
-V1
P2
P3
Bon
B
Boff
0
t

FIG. 11

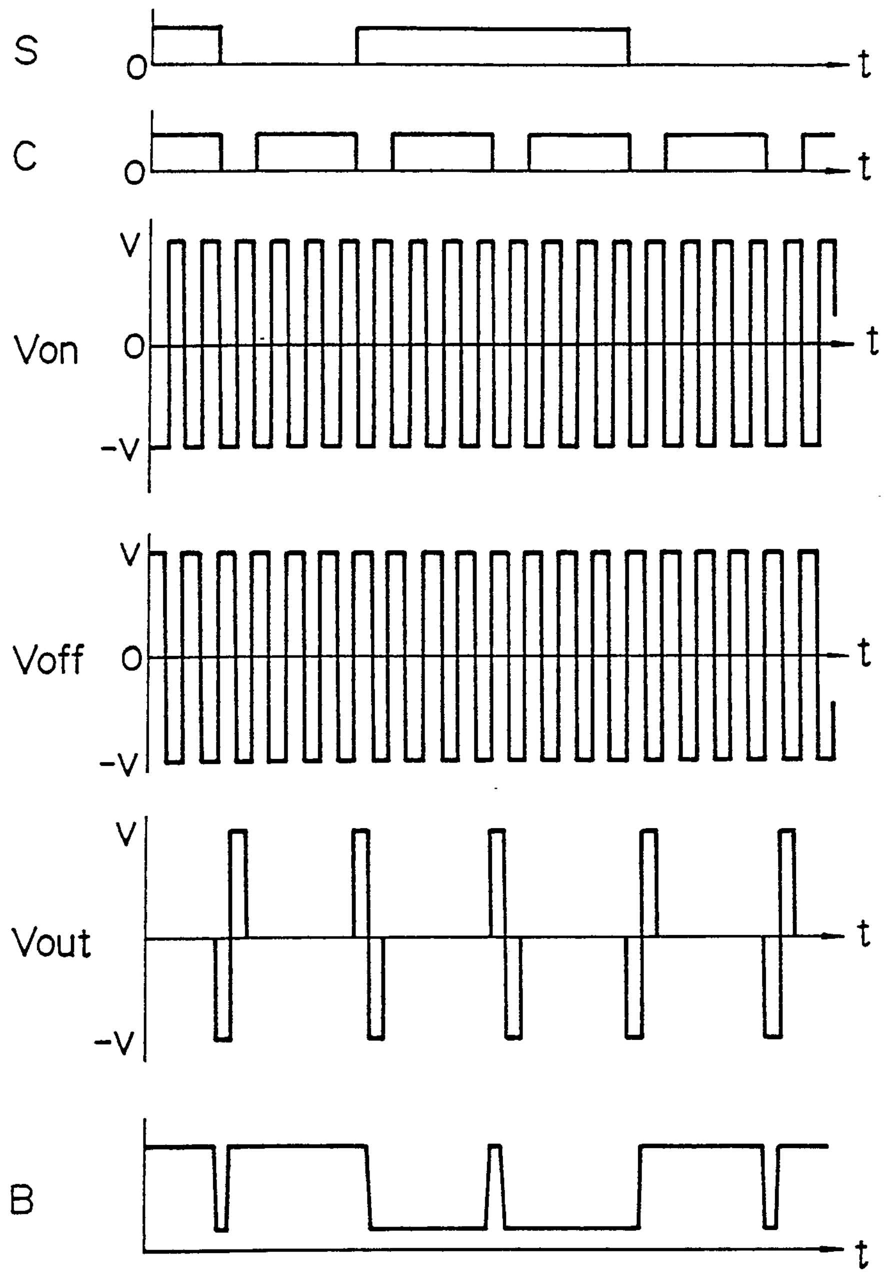

FIG. 12

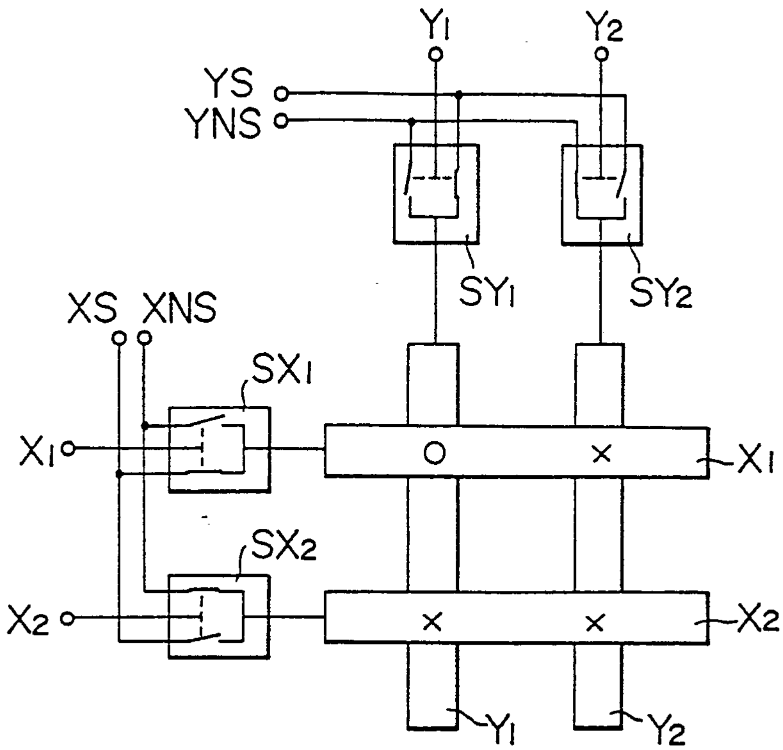
Y1
Y2
YS
YNS
SY1
SY2
XS
XNS
SX1
X1
X1
SX2
X2
X2
Y1
Y2

FIG. 13

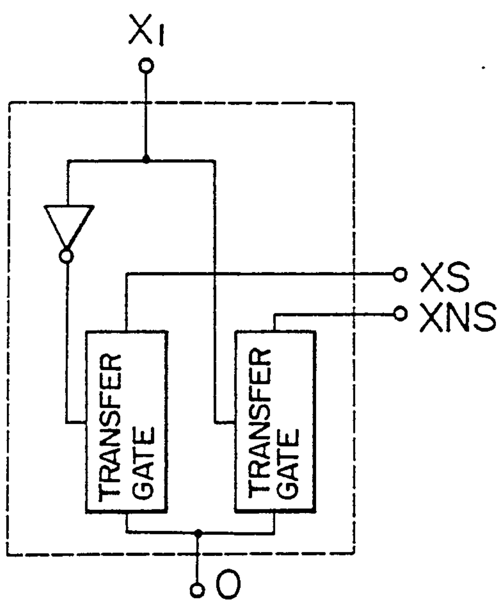
X1
XS
XNS
TRANSFER GATE
TRANSFER GATE
O

FIG. 14

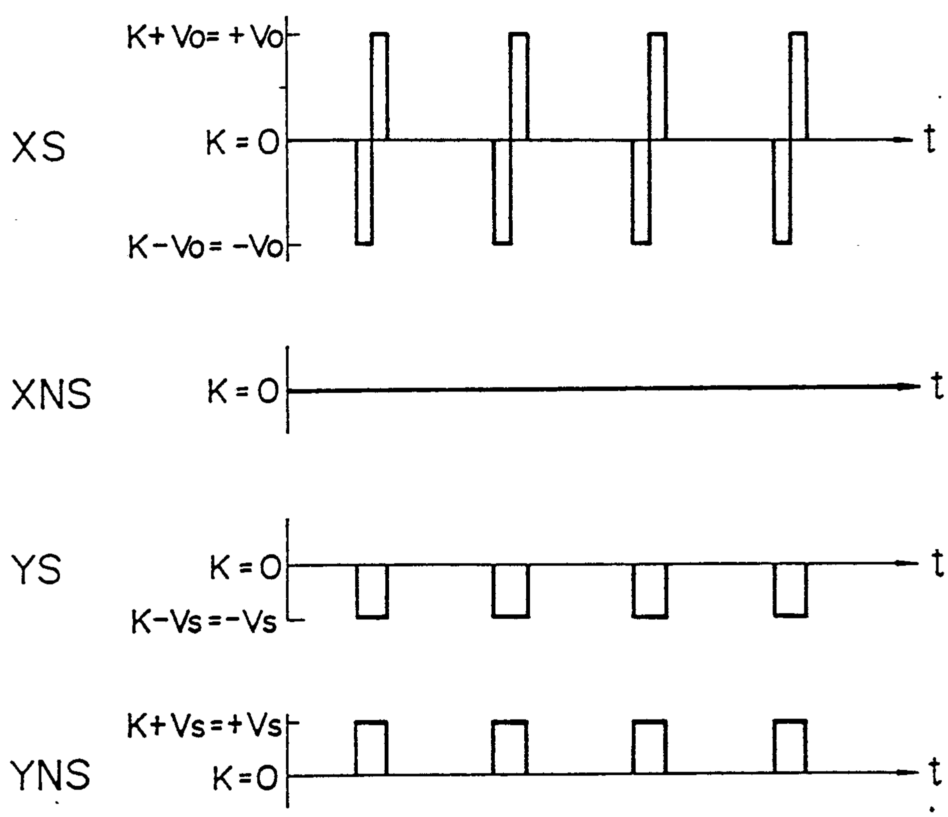

FIG. 15

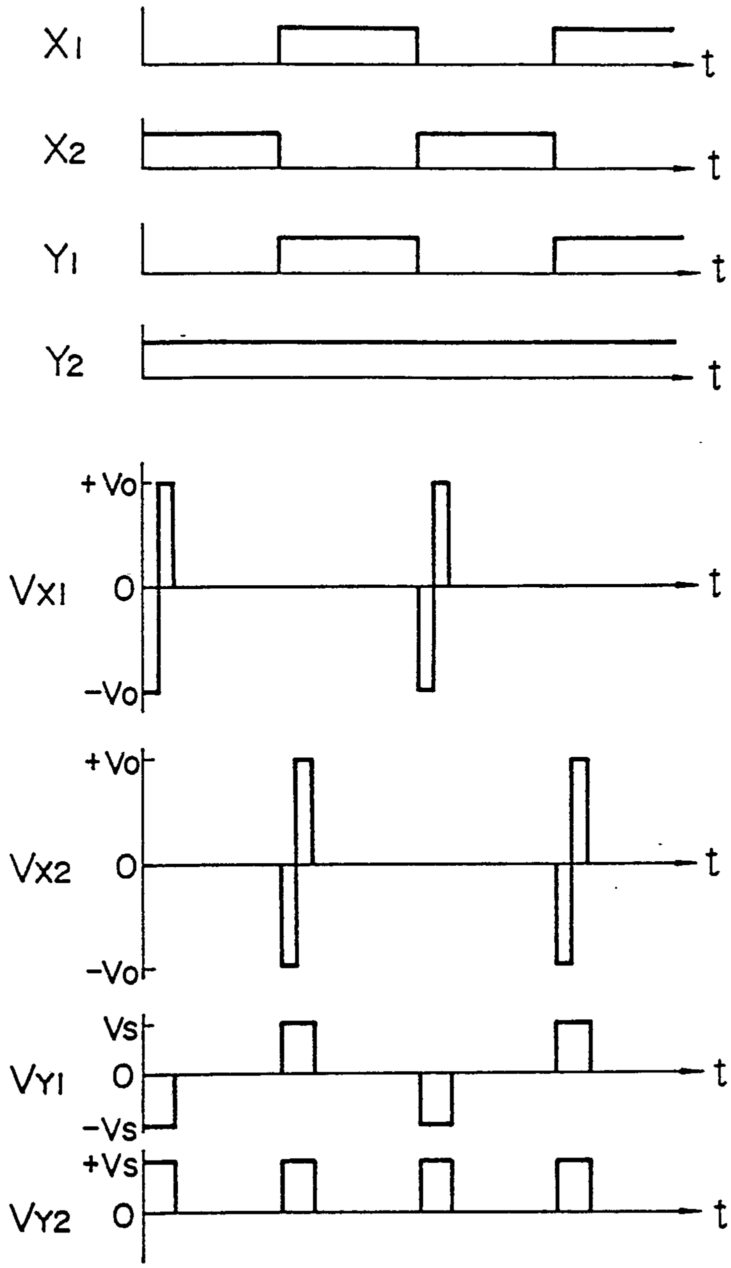

FIG. 16

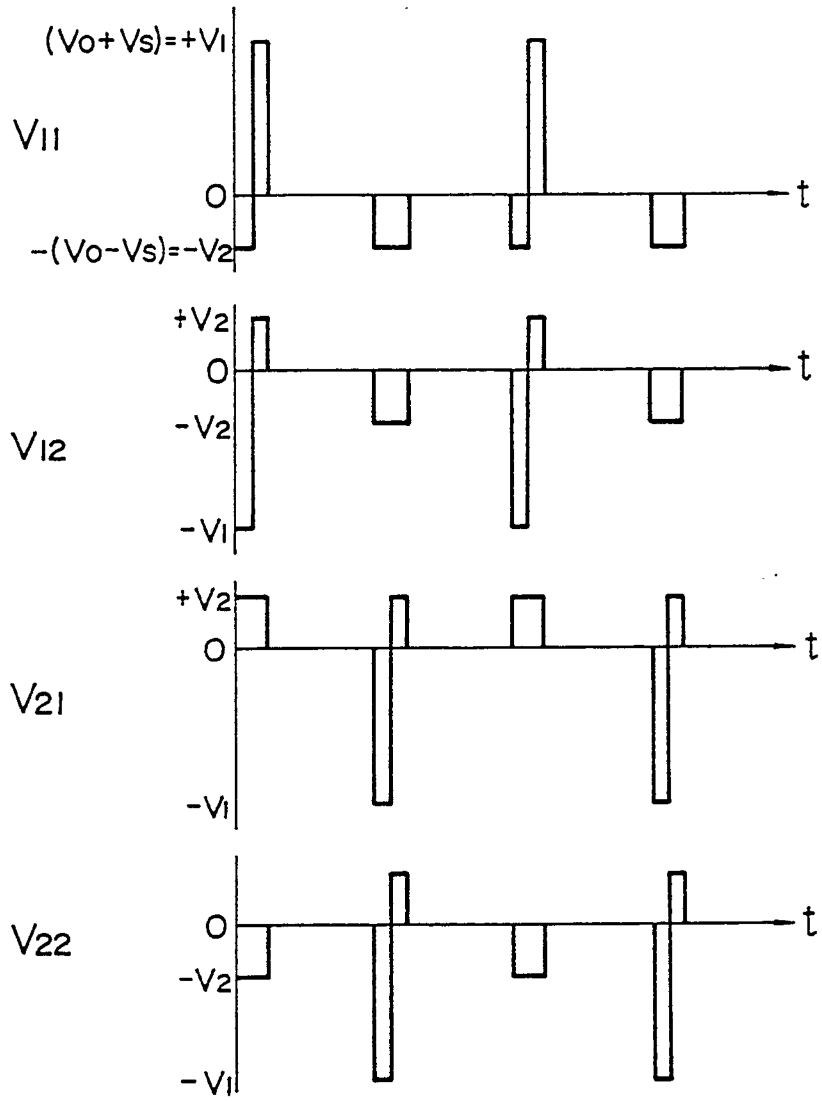

FIG. 17

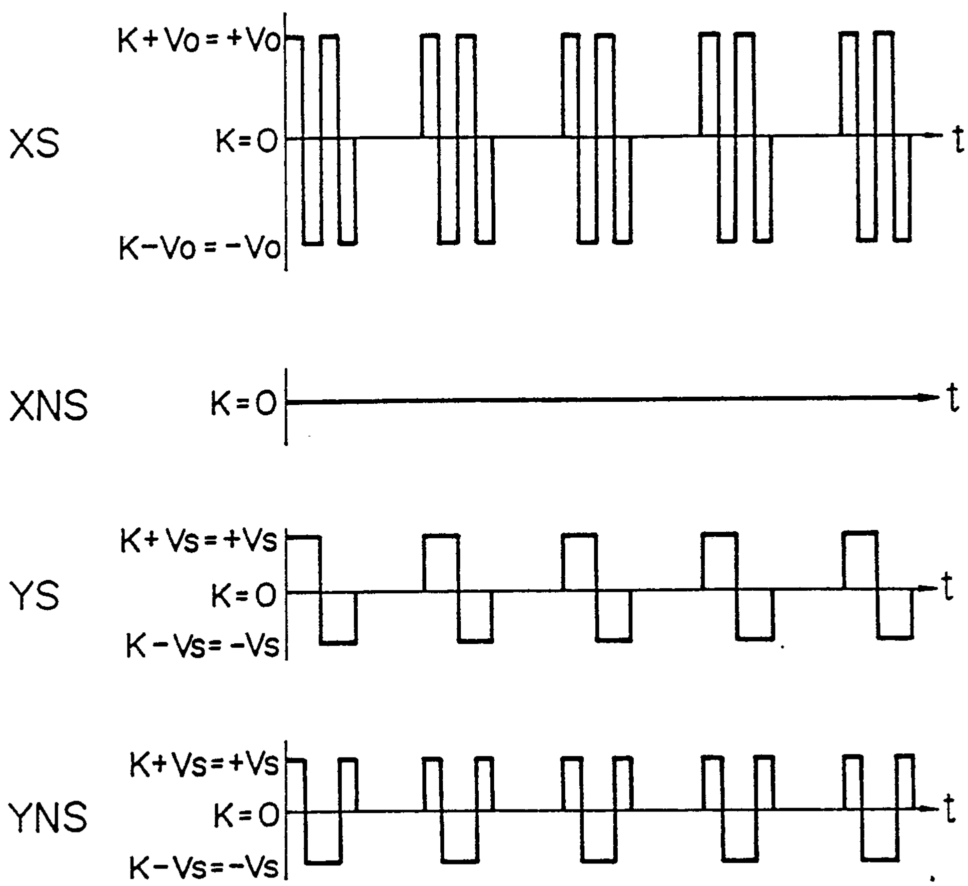
XS
K+Vo=+Vo
K=0
K−Vo=−Vo
t
XNS
K=0
t
YS
K+Vs=+Vs
K=0
K−Vs=−Vs
t
YNS
K+Vs=+Vs
K=0
K−Vs=−Vs
t

FIG. 18 a

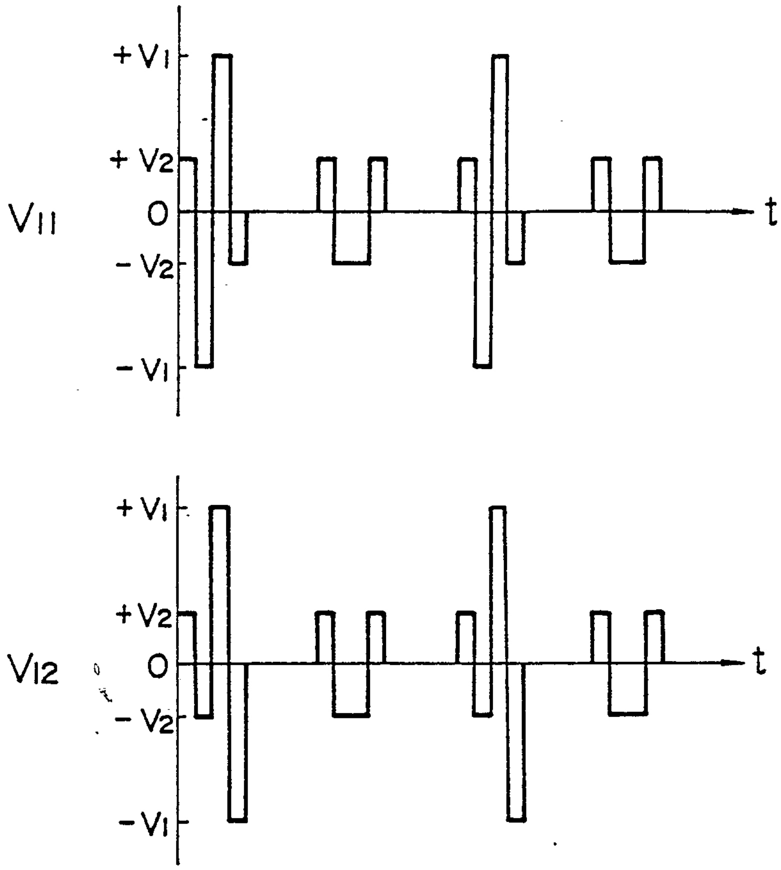

FIG. 18b

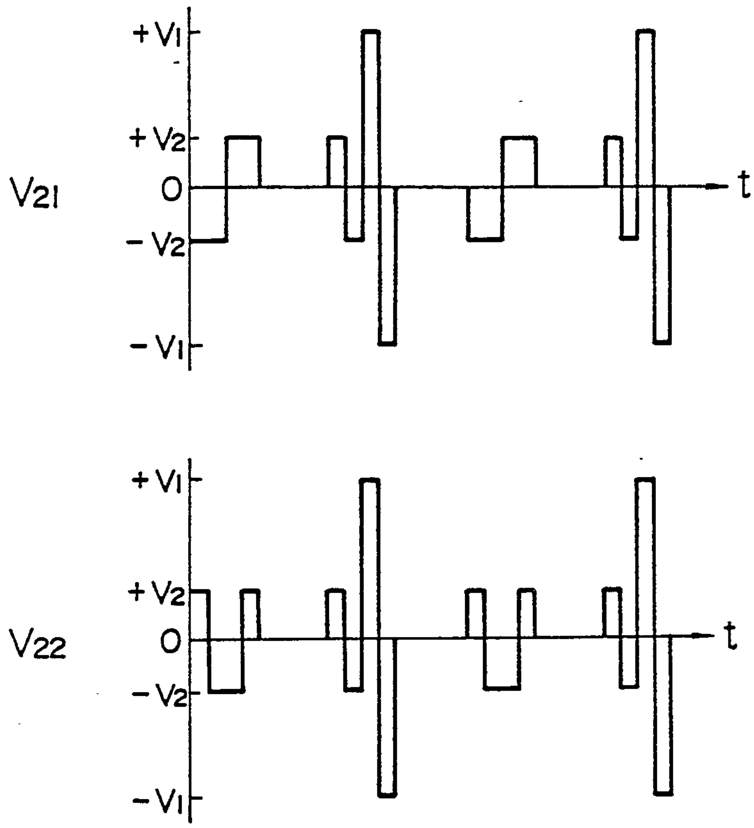

FIG. 19

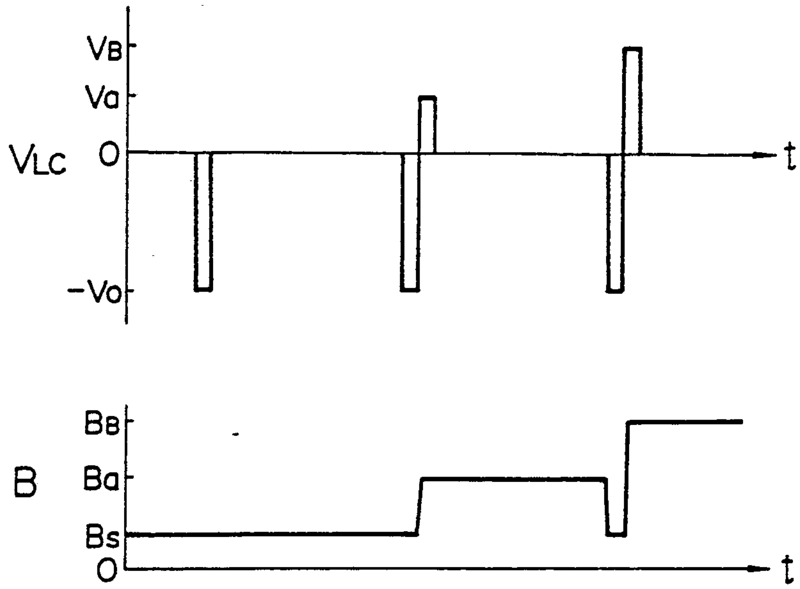

VB
Va
VLC
0
t
-Vo
BB
B
Ba
Bs
0
t


FIG. 20

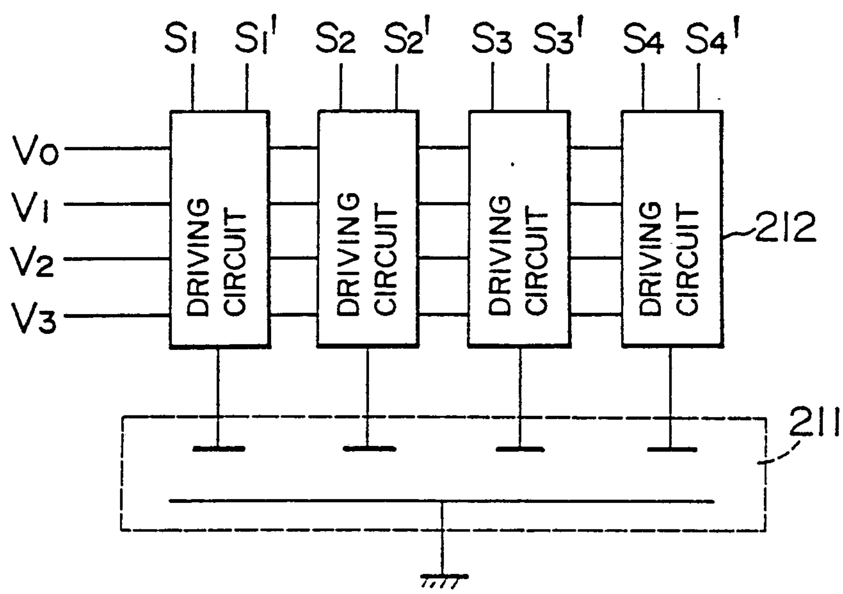

S1
S1'
S2
S2'
S3
S3'
S4
S4'
Vo
V1
V2
V3
DRIVING CIRCUIT
DRIVING CIRCUIT
DRIVING CIRCUIT
DRIVING CIRCUIT
212
211

FIG. 21

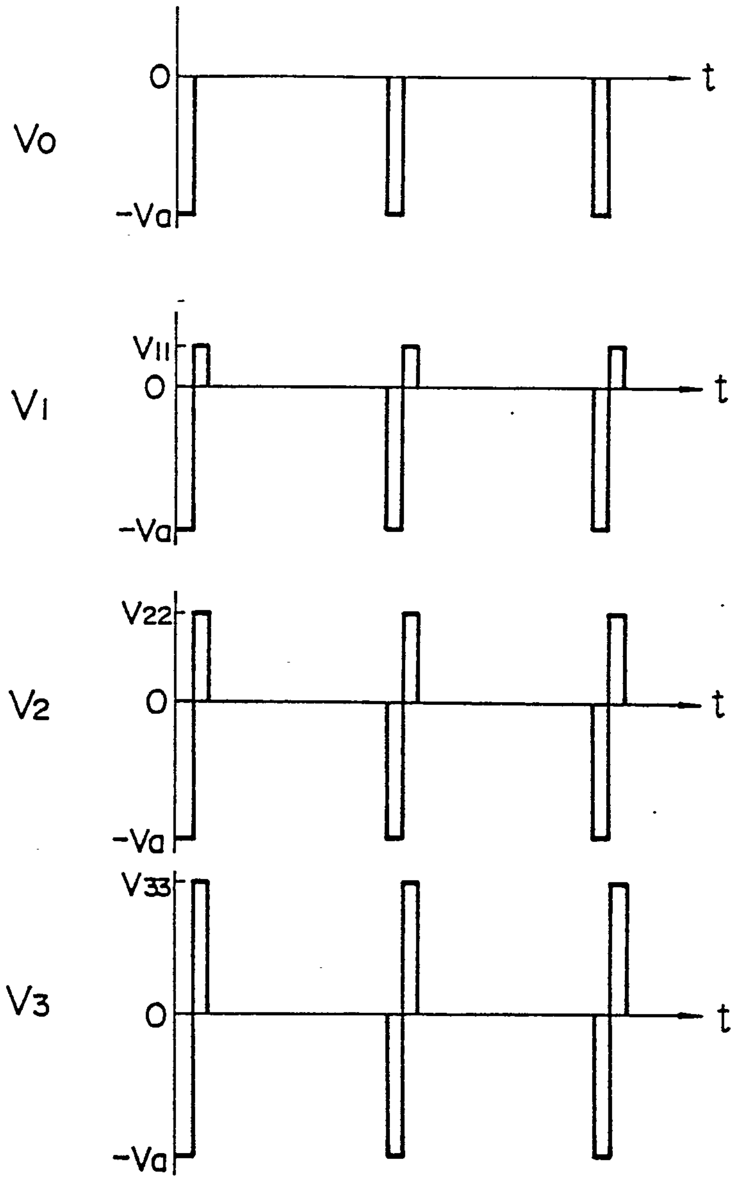

FIG. 22

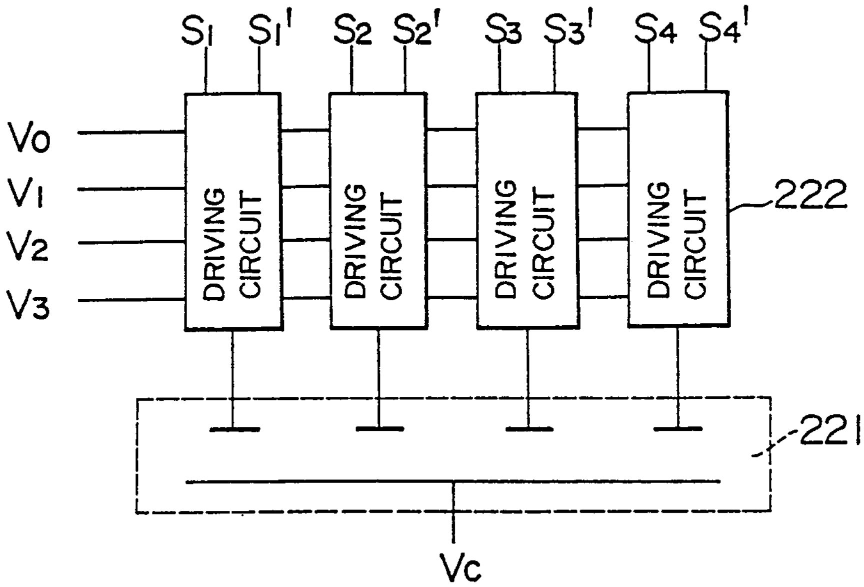
S1 S1' S2 S2' S3 S3' S4 S4'
V0
V1
V2
V3
DRIVING CIRCUIT
DRIVING CIRCUIT
DRIVING CIRCUIT
DRIVING CIRCUIT
222
221
Vc

FIG. 23

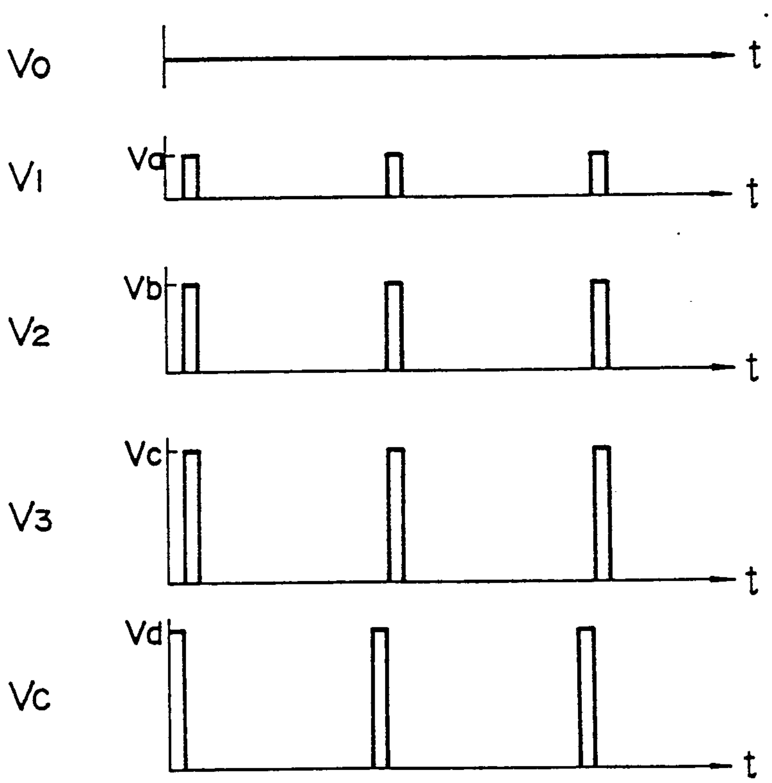
V0
t
V1
Va
t
V2
Vb
t
V3
Vc
t
Vc
Vd
t

FIG. 24

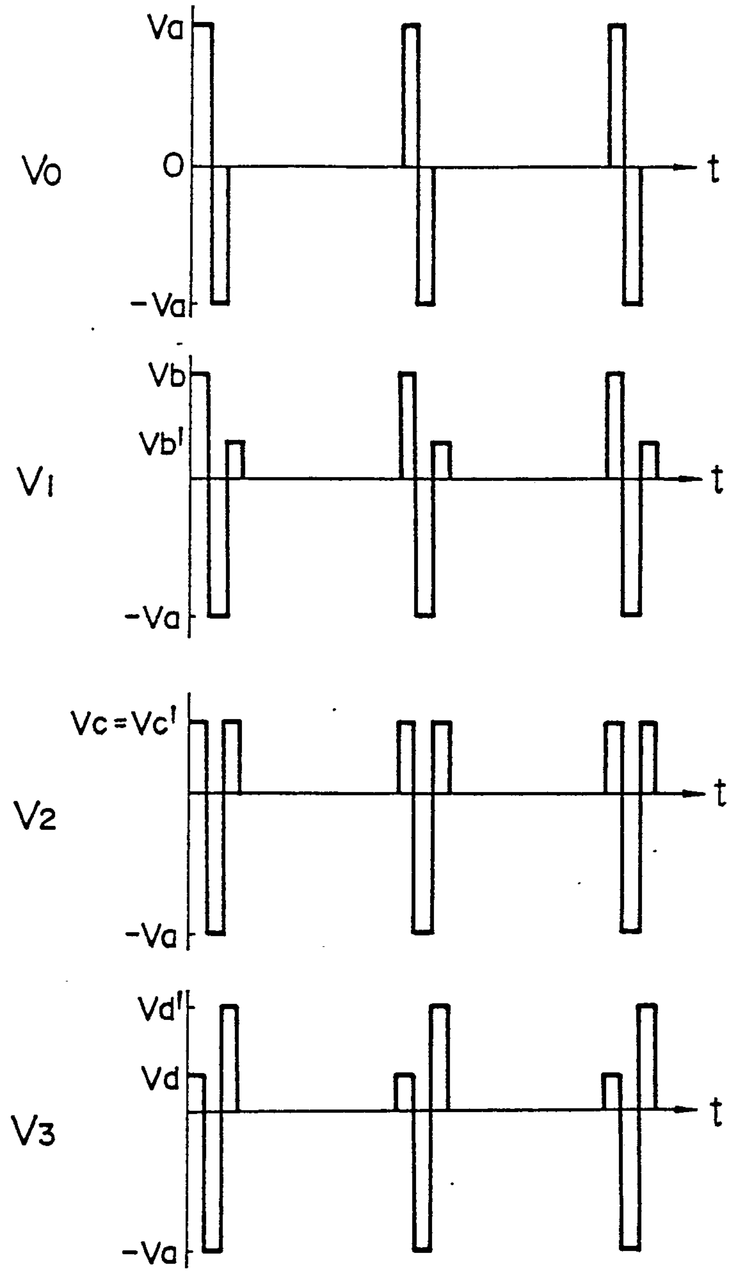

FIG. 25

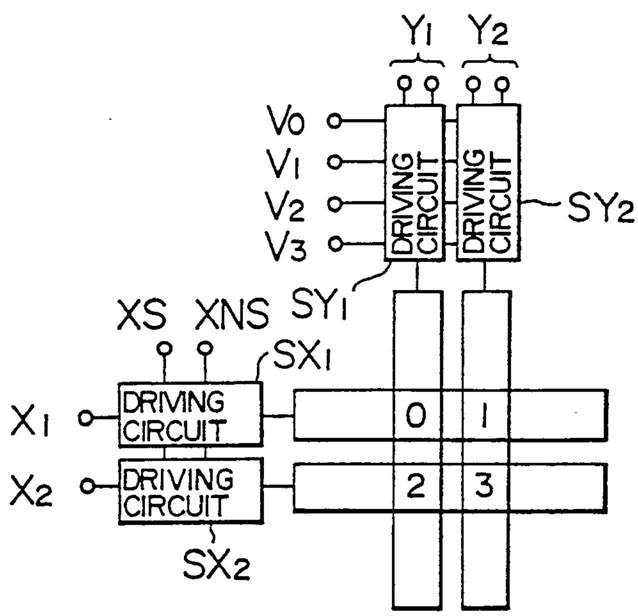
Y1
Y2
V0
V1
V2
V3
DRIVING CIRCUIT
DRIVING CIRCUIT
SY2
SY1
XS
XNS
SX1
X1
DRIVING CIRCUIT
X2
DRIVING CIRCUIT
SX2
0
1
2
3

FIG. 30

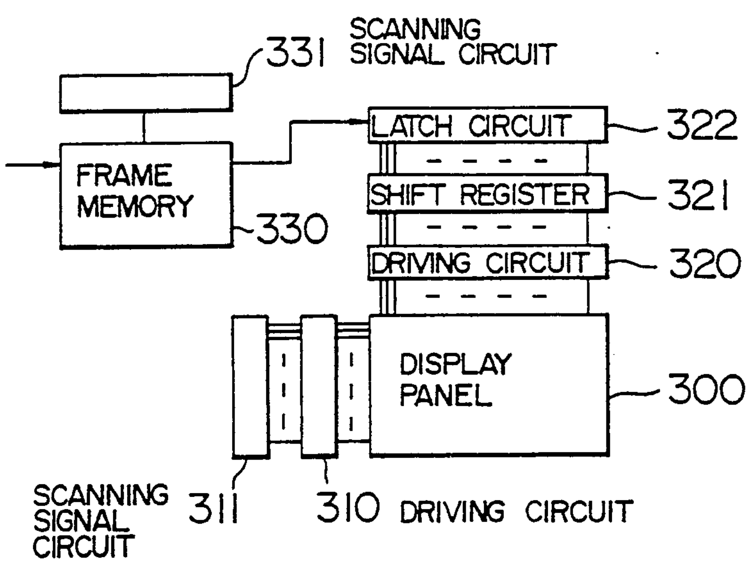
331
SCANNING SIGNAL CIRCUIT
LATCH CIRCUIT
322
FRAME MEMORY
330
SHIFT REGISTER
321
DRIVING CIRCUIT
320
DISPLAY PANEL
300
SCANNING SIGNAL CIRCUIT
311
310
DRIVING CIRCUIT

FIG. 26

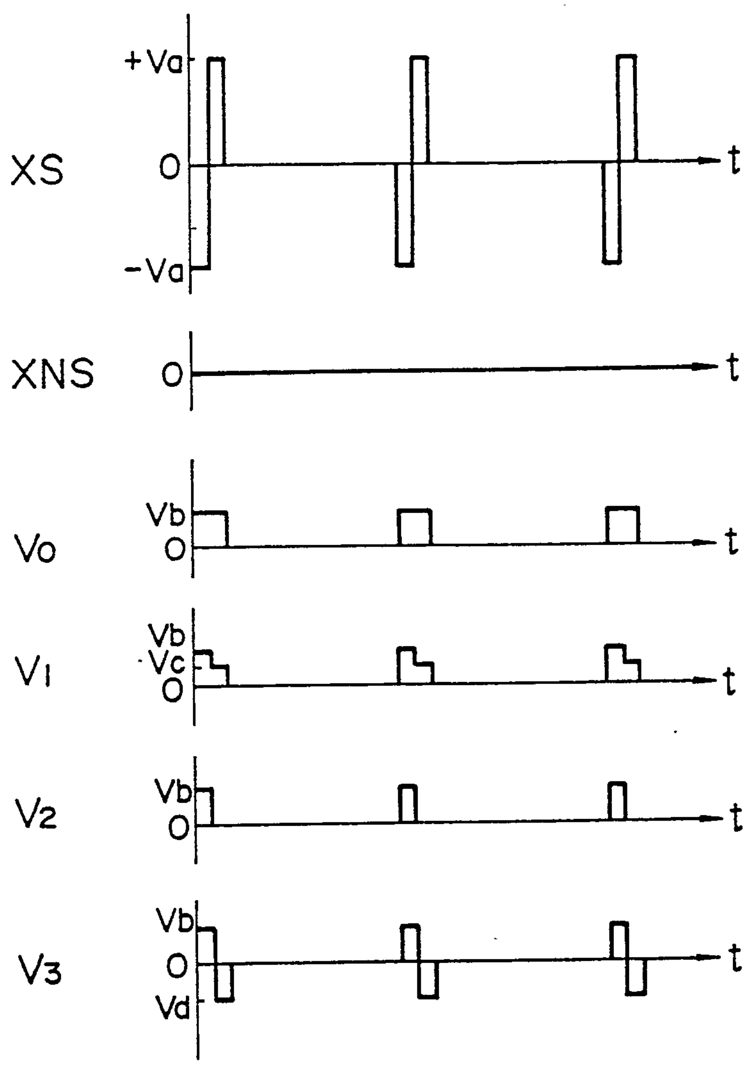

FIG. 27

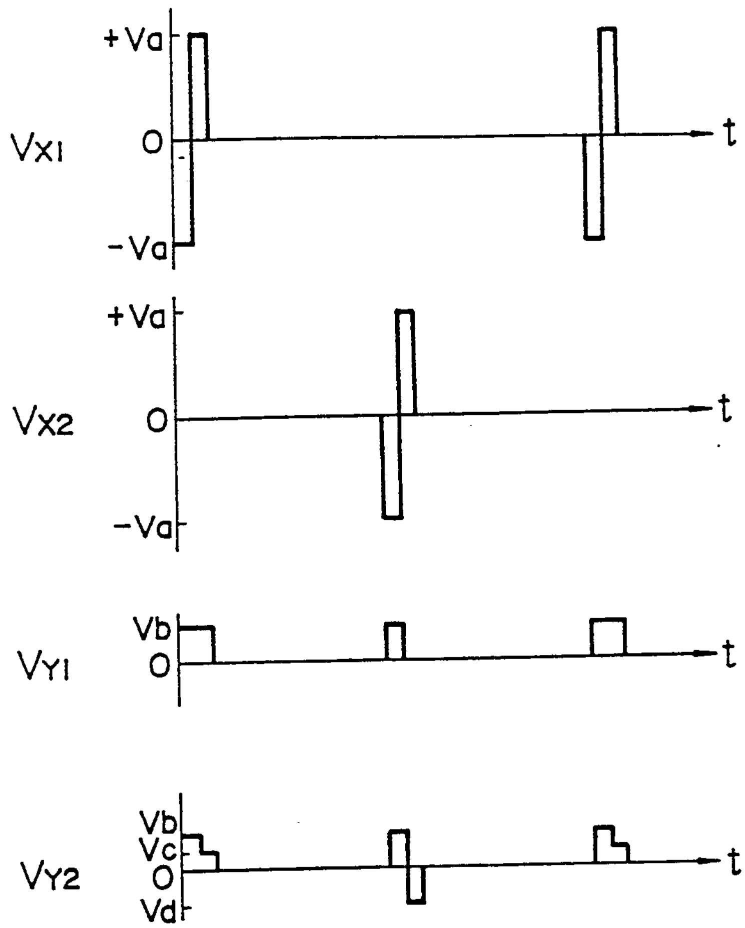

FIG. 28

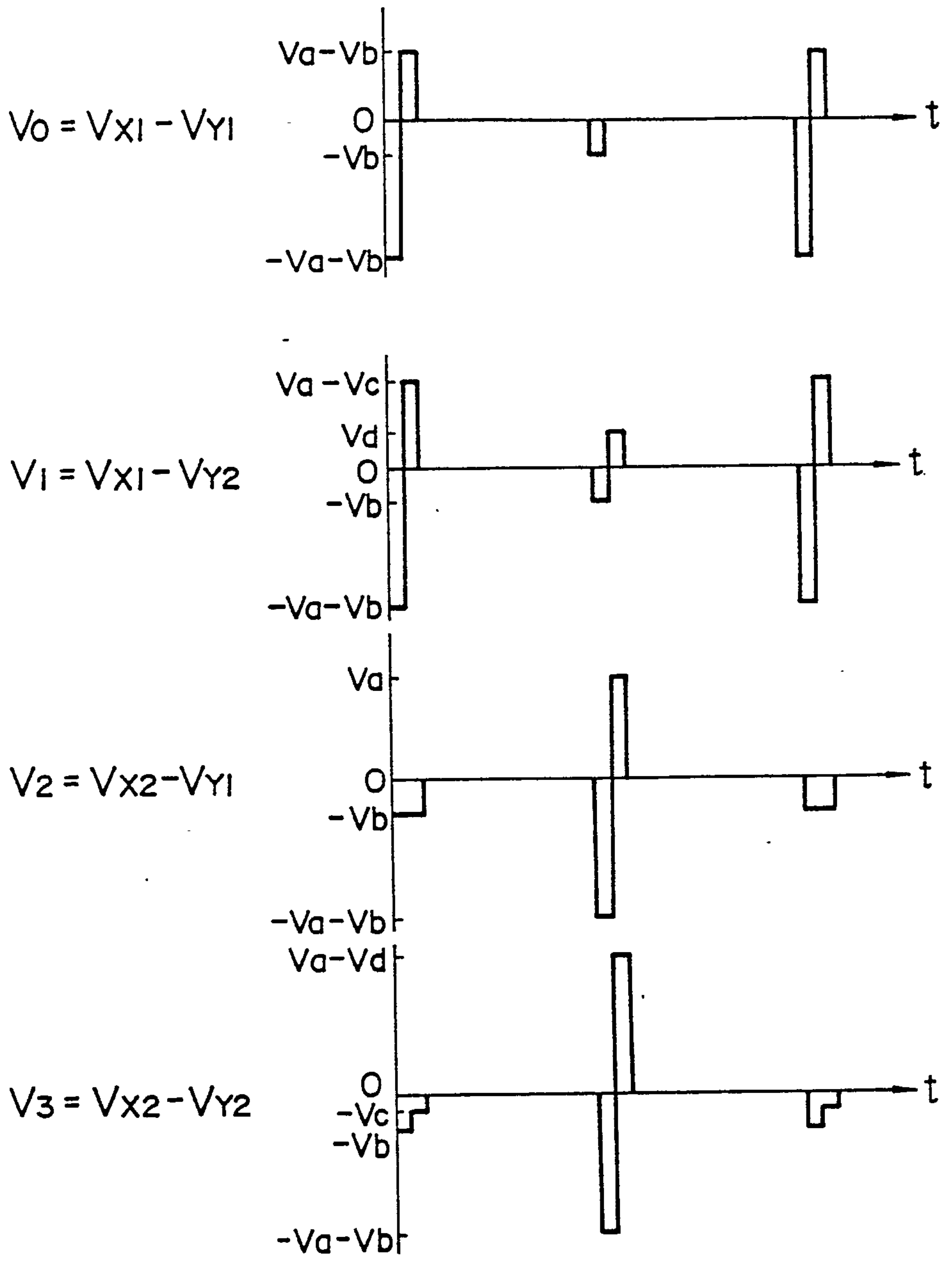
Va−Vb
V0 = VX1 − VY1
0
t
−Vb
−Va−Vb
Va − Vc
Vd
V1 = VX1 − VY2
0
−Vb
t
−Va−Vb
Va
V2 = VX2−VY1
0
t
−Vb
−Va−Vb
Va−Vd
V3 = VX2 − VY2
0
t
−Vc
−Vb
−Va−Vb

FIG. 29